(19) Europäisches Patentamt
European Patent Office
Office européen des brevets

(11) **EP 3 413 318 B1**

(12) **EUROPEAN PATENT SPECIFICATION**

(45) Date of publication and mention
of the grant of the patent:
**07.04.2021 Bulletin 2021/14**

(51) Int Cl.:
**G21G 1/10** (2006.01)   **G21G 4/08** (2006.01)

(21) Application number: **17747352.7**

(22) Date of filing: **30.01.2017**

(86) International application number:
**PCT/JP2017/003226**

(87) International publication number:
**WO 2017/135196 (10.08.2017 Gazette 2017/32)**

(54) **METHOD FOR PREPARING RADIOACTIVE SUBSTANCE THROUGH MUON IRRADIATION, AND SUBSTANCE PREPARED USING SAID METHOD**

VERFAHREN ZUR HERSTELLUNG EINER RADIOAKTIVEN SUBSTANZ DURCH MYONBESTRAHLUNG UND MIT DIESEM VERFAHREN HERGESTELLTE SUBSTANZ

PROCÉDÉ DE PRÉPARATION DE SUBSTANCE RADIOACTIVE PAR IRRADIATION PAR MUONS ET SUBSTANCE AINSI PRÉPARÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2016 JP 2016019334**

(43) Date of publication of application:
**12.12.2018 Bulletin 2018/50**

(73) Proprietor: **Riken**
**Wako-shi, Saitama 351-0198 (JP)**

(72) Inventors:
• **MATSUZAKI, Teiichiro**
**Wako-shi, Saitama 351-0198 (JP)**
• **SAKURAI, Hiroyoshi**
**Wako-shi, Saitama 351-0198 (JP)**

(74) Representative: **SR Huebner - Munich**
**Patent-und RechtsanwaltsPartG mbB**
**Theresienstraße 1**
**80333 München (DE)**

(56) References cited:
**JP-A- H07 239 397    JP-A- 2014 196 997**
**JP-A- 2014 196 997**

• **REIKO FUJITA: "Kakushinteki Kenkyu Kaihatsu Suishin Program (ImPACT) 'Kaku Henkan ni yoru Ko Level Hoshasei Haikibutsu no Ohaba na Teigen . Shigenka' Shinchoku Jokyo ni Tsuite", Kagaku Gijutsu . Gakujutsu Shingikai Kenkyu Keikaku ' Hyoka Bunkakai, Genshiryoku Kagaku Gijutsu Iinkai Gun Bunri . Kaku Henkan Gijutsu Hyoka Sagyobukai (Dai 9 Kai) Shiryo 9-1, 21 August 2015 (2015-08-21), XP009513666,**
• **REIKO FUJITA: "ImPACT ni Okeru Cho Hangenki FP Kaku Henkan Gijustu Kaihatsu", Kagaku Gijutsu . Gakujutsu Shingikai Kenkyu Keikaku . Hyoka Bunkakai, Genshiryoku Kagaku Gijutsu Iinkai Gun Bunri . Kaku Henkan Gijutsu Hyoka Sagyobukai (Dai 7 Kai) Shiryo 7-1, 20 August 2014 (2014-08-20), XP009506606,**

**Description**

Technical Field

The present invention relates to a method for producing a radioactive substance obtained through muon irradiation and a substance to be produced therefrom. More specifically, the present invention relates to a method for producing a radioactive substance produced by causing a nuclear muon capture reaction with a radionuclide, and a substance produced therefrom.

Background Art

Radiation emitted by nuclear radioactive decay and nuclear reaction has been used for various purposes by utilizing radioactive isotope (RI) or a radionuclide whose lifetime is stochastically determined in accordance with quantum mechanics. One typical example of it is nuclear medicine. In nuclear medicine, a substance containing a radionuclide as a part of the chemical structure, or a radioactive substance is used, and a radiation imaging radiation has been adopted for a living body (*in vivo*), such as SPECT (Single Photon Emission Computed Tomography), PET (Positron Emission Tomography), and planar images. Nuclear medicine that has been performed includes medical treatment using irradiation from medications of RI for, e.g., pain relief and *in vitro* nuclear medical inspection using tracers without imaging. Radioactive substances in these applications are used for nuclear medicine and related inspection, such as examination to measure metabolic capability with a tracer that is administered to a living organism (including human), as it may accumulate to a specific lesion. Such examinations include medical treatment by internal irradiation, imaging, capturing of three-dimensional images, and the like.

Conventional methods for producing radionuclides are carried out by irradiating charged particles and neutrons using a cyclotron or a nuclear reactor, or by extracting them from fission products ("nuclear fission method"). Among them, when it comes to the manufacturing method using a cyclotron, charged particles such as protons, deuterium nuclei, or alpha particles ($^4$He nuclei) accelerated to a very high energy by a cyclotron are utilized. In contrast, in the nuclear fission method using nuclear reactors, for example, a target raw material is exposed to neutrons in a nuclear reactor, and thereafter useful nuclides are chemically separated from irradiated target materials or nuclear fission products.

The supply chain of the radionuclide produced by nuclear reactors has never been well-prepared. In particular, although it is necessary for stable production of radionuclides in the nuclear fission method to operate a nuclear reactor for a long time, institutions taking care of radionuclide production are limited to 6 research institutions (NRU reactor in Canada, HFR reactor in Netherlands, BR2 reactor in Belgium, OSIRIS reactor in France, SAFARI-1 reactor in South Africa, and OPAL reactor in Australia). Actually, Japan relies on European and Canadian reactors for supply of $^{99m}$Tc ($^{99}$Mo) (for simplicity, hereinafter referred to as "$^{99}$Mo supply" in the background section) that is consumed domestically. High-enriched uranium (HEU) as a raw material for the nuclear reactor of the Atomic Energy of Canada Limited (NRU reactor) has been exported from the United States to Canada partly on an exemption due to medical demand of $^{99}$Mo supply; however, transportation of HEU is suspended. This is due to prevention of proliferation of nuclear related substances (hereinafter referred to as "nuclear nonproliferation"). The NRU reactor is planned to shut down in March 2018 while the Canadian government has abandoned its successor reactor plan. As for supply chain aspect, the supply of $^{99}$Mo from Europe to Japan was greatly affected by stagnation of aerial transport due to a volcanic eruption in Iceland in 2010. The situation is similar for the United States.

Against this backdrop, one of the inventors of the present application has found a method for producing a radioactive material using a nuclear muon capture reaction (nuclear muon capture reaction, abbreviated as "NMCR" in this application) with a stable nuclide that does not exhibit radioactivity as a raw material (PTL1).

Meanwhile, disposal of discharged spent nuclear waste remains at issue in currently operated nuclear power generation for power supply. Various methods have been proposed for the management of spent nuclear waste from nuclear power plants, among which a method of reprocessing at reprocessing plants is called nuclear fuel cycle. Generally, spent nuclear waste is divided into three types at reprocessing plants in the nuclear fuel cycle. The first one is uranium and plutonium, which are reused as nuclear fuel in the spent radioactive wastes. The second is a high-level radioactive waste including minor actinides (MAs) and fission products (FPs), which are radioactive wastes that are not recycled as nuclear fuel. The third is the remaining low level radioactive wastes. For a high-level radioactive waste, in addition to geological disposal on the premise of long-term storage for tens of thousands of years, combining "partitioning (or 4-group partitioning)" and "transmutation technology" has also been conceived for the purpose of facilitating site location and management of the disposal site (NPL1 and NPL2). In the method of partitioning, the high-level radioactive waste is separated into four groups of nuclides and processed uniquely to each group. Of these groups, a group of radioactive wastes containing MAs and FPs has a higher concentration but with reduced amount than unpartitioned one, so it is possible to reduce the amount of substances to be stored in a glass solidification form or the like only by such partitioning.

However, MAs and FPs still require long-term storage. Therefore, subjecting the group of radioactive wastes containing MAs and FPs to transmutation with an accelerator or the like for the purpose of reducing the long-half-life MAs, FPs or the like is called "partitioning and transmutation" technology (NPL1 and NPL2).

Citation List

Patent Literature

PTL1: JP 2014-196997 A

Non-Patent Literature

NPL1: Atomic Energy Commission [of Japanese Government], "G unbunri/Shoumetushori Gijyutu Kenkyuukaihatsu Chokikeikaku (Long-Term Res earch and Development Plan on Partitioning and Transmutation Technology)" (i n Japanese) [online] http://www.aec.go.jp/jicst/NC/senmon/old/backend/siryo/ba ck21/sanko2.htm [Last retrieved: November 2, 2015]
NPL2: Research Organization for Information Science and Techno logy, Genshiryoku Hyakkajiten ATOMICA (ATOMICA, An Encyclopedia of Nucle ar Energy) "fractional partitioning" (in Japanese), [online], http://www.rist.or.jp/at omica/data/dat_detail.php?Title_No=05-01 -04-01 [Last retrieved: December 21, 2015]
NPL3: Yasuji MORITA, Kenihci MIZOGUCHI, Isoo YAMAGUCHI, Takeshi FUJIWARA and Masumitsu KUBOTA, "Gunbunrihou No Kaihatsu: Syo ukibojikken Niyoru 4 Gunn Gunbunri Purosesu Ni Okeru Tekunechiumu Kyodou No Kakunin (Development of Partitioning Method: Confirmation of Behavior of Technetium in 4-Group Partitioning Process by a Small Scale Experiment)" Jap an Atomic Energy Research Institute, (in Japanese) [online], http://jolissrch-inte r.tokai-sc.jaea.go.jp/pdfdata/JAERI-Research-98-046.pdf
NPL4: Hisamichi YAMABAYASHI, "Kokusanka 99Mo/99mTc No Iryo u Unyou Ni Mukete No Kadai - Kokusanka 99Mo/99mTc No Seizoujyou No Kadai (Problems in Clinical Practice of Domestic Supply of 99Mo/99mTc: Considerations on the Domestic Production of 99Mo/99mTc)", RADIOISOTOPES (in Japanese), Vol. 61 (2012) No. 9 p. 489-496, Japan Radioisotope Association, doi:/10.3769/ radioisotopes.61.489
NPL5: Ryohei ANDO and Hideki TAKANO, "Shiyozumi Keisuiro N enryo No Kakushu Sosei Hyoka (Estimation of LWR Spent Fuel Composition)", JAERI-Research (in Japanese) 99-004,(1999), Japan Atomic Energy Research Institute, [online], http://jolissrch-inter.tokai-sc.jaea.go.jp/pdfdata/JAERI-Researc h-99-004.pdf [Last retrieved: December 24, 2015] Disclosed with detailed data a t http://nsec.jaea.go.jp/ndre/ndre3/trans/sf.html

Summary of Invention

Technical Problem

Among the above-mentioned conventional methods for producing radionuclides, the nuclear fission method has several problems inherent therein. First of all, the necessity of operating a nuclear reactor *per se* would become a hindrance to the stable supply. Furthermore, it requires HEU handling, therefore isolation and extraction work under high dose circumstance is unavoidable. Moreover, concerns over supply of raw materials such as HEU and over nuclear nonproliferation cannot be overcome. Furthermore, only limited facilities can handle these types of processing even if you take a look around the world. Also, when it comes to supply chain of the nuclides whose transportation time is limited due to half-life properties, the supply chain depends upon transportation circumstances by their nature so when the nuclides concerned are distributed via freight delivery. For these reasons, it is not always easy to maintain the supply chain of radionuclides for medical applications, so long as it solely relies on the nuclear fission method.
Differently from any of the above-mentioned methods for producing a radionuclide, the present invention provides a novel method for producing a radionuclide. As a result, the present invention contributes to the stable supply of radioactive substances that contains radionuclides.

Solution to Problem

The Inventors of the present application conceived of adopting a radionuclide for a raw material instead of a stable nuclide conventionally adopted for the raw material in a method for producing a radionuclide utilizing NMCR by a negative muon. That is, in one embodiment of the present invention, provided is a method for producing a radioactive substance comprising step of preparing a target raw material containing a target nuclide which is a radionuclide, and a muon irradiation step for obtaining a first radionuclide through a muon nuclear capture reaction at the target nuclide by irradiating the target raw material with negative muons, wherein the radioactive substance to be produced comprises at least one of the first radionuclide and a second radionuclide, the second radionuclide being at least one descendant nuclide obtained from the first radionuclide via radioactive decay, wherein the target nuclide is at least one of descendant nuclides obtained from the first radionuclide or the second radionuclide via radioactive decay, and wherein the target raw material contains a recycled raw material that contains at least any of: a by-product In any step, a left over substance obtained from the radioactive substance, and a left over substance obtained from unused substance of the radioactive substance, the target nuclide being originated from the recycled raw material.

The inventors of the present invention focus on spent nuclear fuels associated with nuclear power generation in light water reactors. The inventors note that radionuclides that can be used for raw materials of useful nuclide production with NMCR are contained at high concentration in a high-level radioactive waste that is remains of processed spent nuclear fuel In the nuclear fuel cycle. As long as a nuclear reactor for power generation such as a light water reactor is in operation at a nuclear power plant, such radioactive nuclide demand in nuclear medicine is secured and the problem concerning stable supply does not arise.

In particular, radioactive wastes are storable raw materials with sufficiently long half-life when an LLFP (long-lived fission product) contained in FPs Is adopted for the target nuclide. Therefore, supply stability of the radioactive wastes would not always be necessary, and it Is unlikely that we face a raw material shortage even if nuclear reactors for power generation are stopped for any reason.

Furthermore, in one embodiment of the present invention in which $^{99}$Tc is selected for the nuclide of a raw material and then $^{99m}$Tc is produced through NMCR, it is also possible to use $^{99}$Tc that would be a recycled material.

A negative muon is an elementary particle and a type of lepton. In any of the embodiments of the present invention, negative muons are made incident on a target nuclide to cause a muon nuclear capture reaction.

A descendant nuclide is a nuclide exhibiting radioactivity which has undergone one or more stages of radioactive decay. Typically, it includes not only a daughter nucleus generated by some radioactive decay from a parent nucleus, but also another descendant nucleus generated from that daughter nucleus. In any aspect of the present invention, the number of generations is not limited. Radioactive decay through which such descendant nuclide is produced also includes a series of radioactive decays (decay series) that sequentially generate a plurality of radionuclides, such as the neptunium series, the thorium series, and the actinium series.

A radionuclide is a term used to distinguish and identify atomic nuclei exhibiting radioactivity with respect to their nuclear spin states as needed. When the first radionuclide and the second radionuclide are concerned in the present application, the first radionuclide refers to a radionuclide produced directly via the muon nuclear capture reaction. In contrast, the second radionuclide is a nuclide that is determined to be different from the first radionuclide when distinction is made, in terms of nuclear spin states if necessary. The second radionuclide itself is also radioactive, and it is at least one of descendant nuclides of the first radionuclide. In accordance with the definition of descendant nuclides, a daughter nucleus obtained by radioactive decay from a nuclide that is to be classified into a second radionuclide for a certain first radionuclide must also be classified into a second radionuclide from a view point of the first radionuclide.

A radioactive substance is a substance of any form including a radionuclide. Typical chemical forms of it may include an element of a radionuclide substance, a compound including a radionuclide as a part of its chemical structure irrespective of an inorganic or organic compound (radioactive compound), and an association product associated with a radionuclide or a radioactive compound, as well as their ionized cations or anions. Also, the physical form of the radioactive substance is not particularly limited and may be of any physical form including a solid, a liquid, a gas a supercritical fluid, a plasma, and a dilution thereof. In the present application, the physical form of the radioactive substance is not limited and may take any physical form, including a crystal, an amorphous solid, an ionic crystal, a molecular crystal, a powder, an aqueous solution, a non-aqueous solution, an ion, a complex, an association product, a low-molecular substance, polymer molecule, organic and inorganic compounds, and the like.

The process of producing radioactive materials may be broadly categorized into two types; the first type is to make the radionuclide generate radioactivity, to generate an artificial radionuclide or to generate artificially a natural radionuclide by some method, to increase the ratio of the target nuclide, or to reduce the proportion of nuclides that are not one to produce, whereas the second type is to make the radioactive substance containing the radionuclide (hereinafter, including the radionuclide element substance) into the one having the intended chemical structure. In the present application, any process having a nuclear reaction including the first type is referred to as production of radionuclide. It should be noted that the production of the radionuclide described in the present application can include chemical processing in addition to physical processing, in the same manner as conventional production processes of radionuclides.

Advantageous Effects of Invention

In any of the embodiments of the present invention, a useful radionuclide can be produced by a muon nuclear capture reaction utilizing, for example, radioactive wastes originating from spent nuclear fuel of a nuclear power plant. This enables production of a radioactive substance containing a target nuclide through a process that has no uncertainty over the stable supply of raw materials. In addition, this enables production of $^{99}$Mo-$^{99m}$Tc generator by using a recycled

raw material of $^{99}$Tc that is produced in $^{99}$Mo-$^{99m}$Tc generator manufacturing process, $^{99}$Tc found in unused chemicals after formulation, or $^{99}$Tc produced in the generator after use.

Brief Description of Drawings

FIG. 1 is an explanatory diagram illustrating NMCRs on the chart of nuclides in an embodiment of the present invention.

FIG. 2 is an explanatory diagram illustrating a nuclear fuel cycle.

FIG. 3 is an explanatory diagram illustrating a nuclear reaction on the chart of nuclides where Mo isotope is generated by NMCR that use $^{99}$Tc for a target in an embodiment of the present invention.

FIG. 4 is a decay scheme diagram among nuclides with a mass number A = 99 including $^{99m}$Tc.

FIG. 5 is an explanatory diagram illustrating a schematic configuration of a manufacturing apparatus for manufacturing $^{99}$Mo by NMCR adopting a liquid target material in an embodiment of the present invention.

FIG. 6 is an explanatory diagram illustrating an outline of a process for producing $^{99}$Mo by a batch manufacturing process with NMCR in an embodiment of the present invention.

FIG. 7 is a schematic chart illustrating a process outline of ion exchange method for further processing a product obtained by batch processing in an embodiment of the present invention.

FIG. 8 is an explanatory diagram illustrating nuclear reactions on the chart of nuclides where Xe of a mass number of 133 is generated by NMCR in an embodiment of the present invention.

FIG. 9 is a decay scheme diagram between Xe and Cs of a mass number of 133.

FIG. 10 is a schematic configuration diagram illustrating an irradiation processing apparatus for manufacturing $^{133}$Xe by NMCR adopting a liquid target material in an embodiment of the present invention.

FIG. 11 is a schematic configuration diagram illustrating an irradiation processing apparatus for producing $^{133}$Xe by NMCR adopting a solid target material in an embodiment of the present invention.

FIG. 12 is a schematic configuration diagram illustrating a configuration of a Xe-Cs separation apparatus in an embodiment of the present invention.

FIG. 13 is an explanatory diagram illustrating a nuclear reaction on the chart of nuclides where a Rb isotope is generated by NMCR adopting $^{90}$Sr target in an embodiment of the present invention.

FIG. 14 is a decay scheme diagram between Sr and Y having a mass number of 89.

Description of Embodiments

Hereinafter, embodiments related to the production of radioactive materials according to the present invention will be described with reference to the drawings. In the description common parts or elements throughout the drawings are denoted by the same reference numerals, unless otherwise mentioned. Note that materials, amounts of use, ratios, processing contents, processing procedures, elements and specific examples thereof describe in the following specific examples, application examples, nuclide-specific arguments can be appropriately changed without departing from the gist of the present invention. Therefore, the scope of the present invention is not limited to the contents of the following specific description. For the explanation, we first describe the negative muon nuclear capture reaction (NMCR), describe the radionuclide as the target nuclide, and then explain the representative nuclide.

1. Negative Muon Atomic Nuclear Capture Reaction (NMCR)

The negative muon nuclear capture reaction (NMCR), a nuclear reaction by negative muon utilized in this embodiment, has already been disclosed by one of the inventors of the present application (PTL1). The nature and use of the muon, the nuclear reaction mechanism, the method of generating the negative muon, and the NMCR by the negative muon, all of which are described there, are also adopted in the present embodiment. That is, in NMCR by negative muon, when a negative muon is incident on a target atom (hereinafter referred to as "target nuclide"), the negative muon that finally arrives at 1s orbital will be annihilated by spontaneous decay of the muon or will be captured into the nucleus before the annihilation. The phenomenon of this capture into nucleus is referred to as "muon nuclear capture". What is utilized in this embodiment is a nuclear reaction (nuclear muon capture reaction (NMCR)) involving nuclear transmutation of the target nuclide resulting from the muon nucleus capture. Hereinafter, muon or $\mu$ represents negative muon when it is merely described, unless otherwise noted.

The muon nuclear capture reaction (NMCR) includes a nuclear reaction in which the nucleus of the target raw material nuclide captures the muon, generating another element whose atomic number is smaller by one than that of target nucleus. The expression of NMCR in a nuclear reaction mode is written as

$$\mu^- + N\ (Z_0, A_0) \rightarrow N'\ (Z_0 - 1, A_0) + v \qquad \text{(Eq. 1).}$$

Here, the atomic number is $Z_0$ (*i.e.,* the proton number is $Z_0$), the mass number is $A_0$ (*i.e.,* the sum of the proton number and the neutron number is $A_0$), N is a nucleus in general, and N' is a new nucleus to be generated while atomic number $Z_0$ and the mass number $A_0$ are specified. The reaction scheme expressed in Eq. 1 is that muon $\mu^-$ is captured by nucleus N of the target nuclide having atomic number $Z_0$ and mass number $A_0$, and then isobar nucleus N' is generated whose atomic number is decreased by 1 to be $Z_0 - 1$, while a neutrino v is generated.

The actual NMCR includes several variations depending on the combination of the number of neutrons released during the reaction and the nucleon number of the generated nucleus. The first one is a reaction expressed by Eq. 1 and expressed as "$(\mu^-, v)$ reaction". The second one is expressed as

$$\mu^- + N\ (Z_0, A_0) \rightarrow N''\ (Z_0 - 1, A_0 - 1) + n + v \qquad \text{(Eq. 2)}$$

where N" is a nucleus which is neither N nor N'. This is a reaction in which one neutron n is released and the mass number $A_0$ decreases by one. Moreover, another reaction, expressed as

$$\mu^- + N\ (Z_0, A_0) \rightarrow N'''\ (Z_0 - 1, A_0 - 2) + 2\,n + v \qquad \text{(Eq.3)}$$

may occur in which two neutrons 2n are released and the mass number $A_0$ is decreased by two, where N''' represents an atomic nucleus that is neither N, nor N', nor N". The reactions of Eqs. 1 to 3 are expressed briefly as follows:

    0 neutron released:
    $(\mu^-, v)$ reaction: N' $((Z_0 - 1), A_0)$ generation,
    1 neutron released:
    $(\mu^-, n\ v)$ reaction: N" $((Z_0 - 1), (A_0 - 1))$ generation, and
    2 neutrons released:
    $(\mu^-, 2\ n\ v)$ reaction: N''' $((Z_0 - 1), (A_0 - 2))$ generation.

The same applies to the following. It is to be noted that which isotopes are actually produced in what proportion depends on the nucleus of the target nuclide and the structure of the nucleus generated.

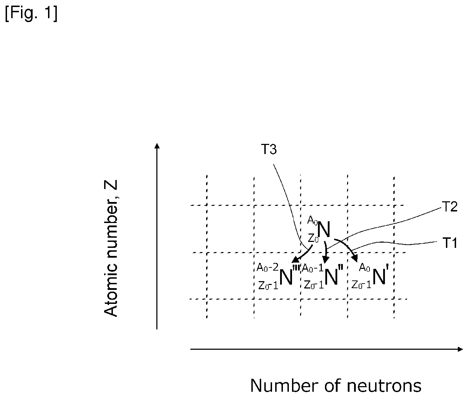

The reactions of NMCR formulated in the Eqs. 1 to 3 and so on can be explained on the basis of the chart of nuclides. FIG. 1 is an explanatory diagram illustrating NMCRs on the chart of nuclides in an embodiment of the present invention, where the atomic nucleus N portion on the chart of nuclides is enlarged with the atomic number Z on the vertical axis and the neutron number on the horizontal axis. The reaction $(\mu^-, v)$ according to Eq. 1 generates atomic nucleus N' that is located at a cell of one right column and one below row on the chart of nuclides with relative to the cell of nucleus N, the target nuclide to which muon $\mu^-$ collides. The nuclear reaction is indicated by path T1. Reactions through which neutrons are released such as $(\mu^-, n\ v)$ and $(\mu^-, 2n\ v)$ reactions according to Eqs. 2 and 3 correspond to ones that produce nuclei N" and N''' at shifted positions to the left of the cell from the one right column one below row for the nucleus N by the number of released neutrons. These nuclear reactions are indicated by paths T2 and T3, respectively. The explanation set forth herein is only for describing the positional relationship on the chart of nuclides. It does not mean intermediate nuclei under the path are generated sequentially. For example, N" is generated without stopping at N'.

One of useful properties of NMCR is that there are few restrictions on the kinds of producible radionuclides, that is, most radionuclides can be produced. Any sort of radionuclide can be generated so long as a relevant target nuclide for the muon irradiation can be prepared. Another useful property of NMCR is that it can be caused with a very high degree of probability as long as a muonic atom can be formed. In other words, there is an extremely high probability that the nuclear reaction occurs comparing with one in a common nuclear reaction with neutron which is governed by a reaction cross-section (unit: barn). From these properties, it can be said that the production of radionuclide by NMCR has a high degree of freedom in selection of radionuclide, and can be carried out with significant efficiency. NMCR is advantageous also in the production capacity of nuclides.

In addition, advantages of use of muon can be found also in the practically important property that muon tends to be easily captured by atoms having a large atomic number, or atoms with more protons when plural sorts of atoms are irradiated by muons. Briefly, when an element having a small atomic number such as hydrogen, helium, carbon, nitrogen, oxygen or the like and a target nuclide having a large atomic number are contained in a substance, NMCR occurs at the target nuclide having a large atomic number with a high probability. Therefore, in a material to be irradiated that contains the target nuclide (hereinafter referred to as "target raw material"), the target nuclide is allowed to form a compound with an element having a smaller atomic number ("light element") than that of the target nuclide, or to form an association product with a light element. The target nuclide can also be get mixed with another target nuclide or other target substance consisting of only light elements, dispersed in light elements, or even diluted with a diluent containing light elements only (e.g., helium gas or water). As a result, it is easy to change the production conditions according to various manufacturing requirements. As a typical example, NMCR can be caused with a target nuclide with a high probability even if a compound of a target nuclide and an element having a smaller atomic number than that of the target nuclide is adopted as the target raw material. For another typical example, it is also easy to cause the NMCR by bringing the target material into contact with or mixing with the fluid medium for the ease of transportation. These properties greatly enhance the practicality of radioactive materials and production of radionuclides that utilize NMCR.

Furthermore, the fact that radioactivity of the radionuclide produced is determined by the half-life of the radionuclide to be produced is also an advantageous property for facilitating the radionuclide production with NMCR. This property means that a radionuclide with a short half-life can be produced in a short period of time, whereas a long time is required for a radionuclide with a long half-life, when the same amount of radioactivity is to be produced.

In addition, difference in atomic numbers between the target nuclides and the generated radionuclide is useful at the time of separation and recovery of the radionuclide after production. This is because if the physical or chemical properties change with their atomic numbers, it becomes easy to separate the target nuclide in the target raw material and the generated radionuclide by way of a physical or chemical method.

Additional advantageous properties that facilitate the production of radionuclides in NMCR may be found in the fact that it is easy to automate by utilizing an appropriate conveying device and that the amount of radioactive substances that may become impurities is small.

2. Radionuclide for Target Nuclide

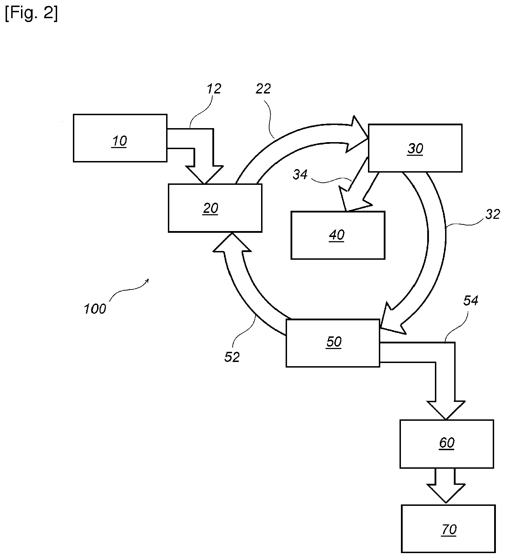

In the present embodiment, radionuclides are used for target nuclides of NMCR. The radionuclides can typically be extracted from a high level radioactive waste discharged from a reprocessing process for reprocessing spent nuclear fuel from nuclear power plants. FIG. 2 is an explanatory diagram illustrating the reprocessing system (nuclear fuel cycle) of spent nuclear fuel used in nuclear power plants. Table 1 also lists half-lives and masses of nuclides of fission products (FPs), which is a part of spent nuclear fuel, in mass content per ton. Of the FPs, radionuclides having a half-life of more than 200,000 years are also called long-lived fission products (LLFPs). Nuclides in FPs or LLFPs that can be used as raw materials for producing useful radionuclides by NMCR are described below. As indicated in the nuclear fuel cycle 100 in FIG. 2, fuel 22 to be used in the nuclear power plant 30 is uranium 12 which was mined from a uranium mine 10 and processed in a fuel processing plant 20. From a nuclear power plant 30 spent nuclear fuel 32 and a low level radioactive waste 34 are discharged. The low level radioactive waste 34 is disposed of in the low level radioactive waste disposal facility 40, whereas the spent nuclear fuel 32 is further sent to the reprocessing plant 50, where it is separated into recovered uranium or plutonium 52 and a high level radioactive waste 54. On one hand, the recovered uranium or plutonium 52 is sent to the fuel processing plant 20 again and is used for a so-called MOX fuel in power generation at the nuclear power plant 30. On the other hand, a high-level radioactive waste 54 is processed into a vitrified solidification body or the like, for example, and then sent to a high level radioactive waste storage facility 60, and finally is brought into under control at a high level radioactive waste disposal facility 70 for a long time.

[Table 1]

| Nuclide | Half-life | Content (per 1 ton) |
| --- | --- | --- |
| $^{79}Se$ | 295 k y | 6g |
| $^{90}Sr$ | 28.8 y | 0.6kg |
| $^{93}Zr$ | 1.61 M y | 1kg |
| $^{99}Tc$ | 211 k y | 1kg |
| $^{107}Pd$ | 6.5 M y | 0.3kg |
| $^{126}Sn$ | 230 k y | 30g |
| $^{129}I$ | 15.7 My | 0.2kg |
| $^{135}Cs$ | 2.3 M y | 0.5kg |

(continued)

| Nuclide | Half-life | Content (per 1 ton) |
|---------|-----------|---------------------|
| $^{137}$Cs | 30.1 y | 1.5kg |

y: year, M: $10^6$, k: $10^3$

3. Details of Nuclides

Typical nuclides that can be used as raw materials for producing useful radionuclides through NMCR from the FPs and LLFPs are $^{99}$Tc, $^{134}$Cs, $^{135}$Cs, and $^{137}$Cs, and $^{90}$Sr. As indicated in Table 1, a high-level radioactive waste contains high concentrations of $^{90}$Sr, $^{99}$Tc, $^{135}$Cs, and $^{137}$Cs. That is, $^{99}$Mo is produced from $^{99}$Tc, where $^{99}$Mo is used for obtaining $^{99m}$Tc, $^{133}$Xe is produced from $^{134}$Cs, $^{135}$Cs, and $^{137}$Cs, and $^{89}$Sr is produced from $^{90}$Sr. Details of combinations of these raw material nuclides and radionuclide to be produced will be described.

3-1. Production of $^{99}$Mo from $^{99}$Tc

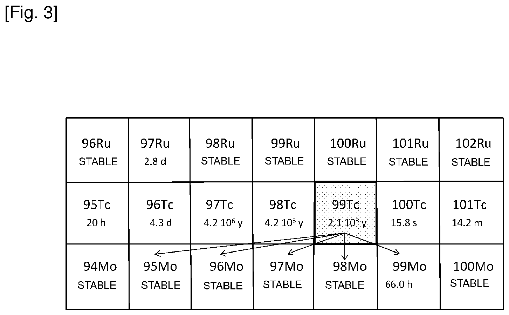

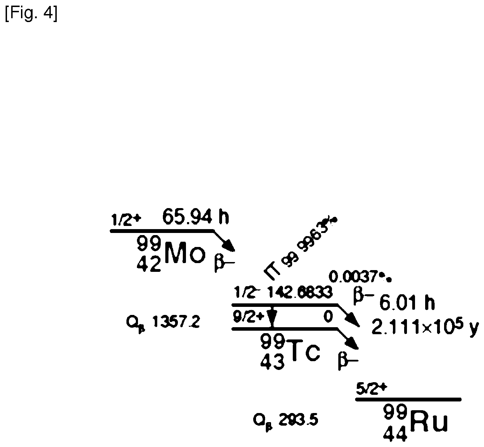

According to the present embodiment, $^{99}$Mo can be produced from $^{99}$Tc, which is a radionuclide. To produce a $^{99}$Mo-$^{99m}$Tc generator $^{99}$Mo (half-life: 66.0 h) is used, 82.4% of which decays by β⁻ decay into $^{99m}$Tc. By gamma decay $^{99m}$Tc decays into $^{99}$Tc with a half-life of 6.02 hours with a property in which gamma ray of 140.5 keV is released, where $^{99m}$Tc is used mainly in SPECT and is used for imaging agents for various organs, including brain imaging agent, thyroid function test agent, and parathyroid disease diagnostic agents. $^{99m}$Tc is an important nuclide for organ scintigram, accounting for about 80% of the radionuclides consumption in nuclear medicine RI. There are some countries that rely on imports from abroad for all domestic consumption of $^{99}$Mo-$^{99m}$Tc generators. The nuclear reaction in which Mo isotopes are generated by NMCR targeting $^{99}$Tc is depicted on the nuclear diagram in FIG. 3. A decay scheme diagram regarding to $^{99}$Mo-$^{99m}$Tc generator is illustrated in FIG. 4.

In the present embodiment, NMCR is used in a process to produce $^{99}$Mo from target material of Tc containing $^{99}$Tc. When NMCR targeting $^{99}$Tc is performed, schemes of reaction become as follows:

$^{99}$Tc (μ⁻, v) $^{99}$Mo,
$^{99}$Tc (μ⁻, n v) $^{98}$Mo,
$^{99}$Tc (μ⁻, 2n v) $^{97}$Mo,
$^{99}$Tc (μ⁻, 3n v) $^{96}$Mo, and
$^{99}$Tc (μ⁻, 4n v) $^{95}$Mo.

These schemes are also understood through transmutation traces on the nuclear diagram in Figure 3. Among the Mo isotopes, $^{99}$Mo is used for the $^{99}$Mo-$^{99m}$Tc generator utilizing the decay illustrated in FIG. 4. In NMCR with $^{99}$Tc as the target nuclide, all of $^{95}$Mo-$^{98}$Mo among the producible isotopes of Mo are stable nuclei, and thus any other radioactive isotopes than $^{99}$Mo is not found. That is, when $^{99}$Mo is manufactured from $^{99}$Tc by NMCR, only the intended nuclide is produced without producing any radioactive waste.

3-1-1. Production Amount of $^{99}$Mo from $^{99}$Tc by Transmutation of NMCR Next, the estimation of the amount of $^{99}$Mo produced by NMCR irradiated with muon will be described for the cases of two irradiation conditions. The amount (number count) of nuclide to be generated is called a muon transmutation rate $N_{TM}$ and is calculated by the following equation:

$$N_{TM} = I_{\mu^-} \times R_c \times P_{NC} \times P_{RBR},$$

where $I_{\mu^-}$: number of muons/sec,
$R_C$: abundance of target nuclei,
$P_{NC}$: muon nucleus capture rate, and
$P_{RBR}$: branching ratio of muon nuclear capture reaction.

The abundance $R_C$ of the target nuclei is the proportion of the target nuclei in the target material for irradiation. The muon nuclear capture rate $P_{NC}$ is the probability that muonic atoms are generated and muons are captured by the nucleus. The branching ratio $P_{RBR}$ of the muon nuclear capture reaction is a factor depending on the numbers of neutrons released. In particular, $R_C \times P_{NC} \times P_{RBR}$ is referred to as "reaction coefficient" in the present application. This reaction coefficient represents the transmutation efficiency per muon. It should be noted that the reaction coefficient and the muon transmutation efficiency do not include a reaction cross section. That is, since the muon can be stopped at the target nuclide, one muon can transmute one nucleus without fail. In other words, if a muon can be captured by the nucleus of the target material, one or more types of NMCR will necessarily occur at certain ratios. The ratios are relative proportions among the probabilities of occurrence caused by each of a plurality of NMCRs expressed as a ($\mu^-$, xn v) reaction with x being an integer of 0, 1, 2, 3, 4, 5, each of which for a target nuclide among them corresponds to the branching ratio $P_{RBR}$ in the above. In addition, "without fail" in this context means that when capturing muons in a nucleus of the target material, at least one of the NMCRs explained above occurs, and the total of occurrence probabilities of NMCRs at that time is 100%. For this reason, NMCR has high production efficiency, and is a technique that requires only a short irradiation time for RI production.

The operating conditions of the apparatus for estimating the amount of $^{99}$Mo produced are:

proton accelerator: 500 MeV, 5 mA, proton beam, and
the number of protons: $6.2 \times 10^{18} \times (5/1000) = 3.1 \times 10^{16}$ number/sec.

Furthermore, in order to estimate the intensity of the muons irradiated from the generated protons, the following assumptions were made:

Proton/negative muon conversion coefficient: 0.1 (10%), and
Muon transport efficiency: 0.01 (1%)

As a result, the number of negative muons that can be irradiated is $3.1 \times 10^{16} \times 0.1 \times 0.01 = 3.1 \times 10^{13}$ counts/sec. As mentioned above, all muons are able to stop at the target material. In addition, it is assumed that nuclear absorption takes place for all negative muons from the 1s state ($P_{NC} = 1.0$) and nuclear transmutation occurs according to the probability of generating nuclei (reaction coefficient) via reaction branching.

Furthermore, the following assumptions were made regarding the branching ratio:

($\mu^-$, v) reaction: 10%,
($\mu^-$, n v) reaction: 50%,
($\mu^-$, 2n v) reaction: 20%,
($\mu^-$, 3 n v) reaction: 15%, and
($\mu^-$, 4n v) reaction: 5%.

That is, 10% of the NMCR was assumed to be involved in $^{99}$Mo production. Note that the actual branching ratio is determined based on experiments. Furthermore, radioactivity of the generated nuclide after muon irradiation (unit: Bq) is given by

$$A_{RI} (t_{irradiation}) =$$
$$(\text{number of muons}) \times (\text{reaction coefficient}) \times$$
$$(1\text{-exp} (- 0.693/T_{1/2} \times t_{irradiation})).$$

Here, $T_{1/2}$ is the half-life of the producing nucleus, and $t_{irradiation}$ is the muon irradiation time. Radioactivity after cooling is

$$A_{RI} (t) (t_{cooling}) = A_{RI} (0) \exp (-0.693/T_{1/2} \times t_{cooling}).$$

Here, $t_{cooling}$ is the cooling time, and $A_{RI} (0)$ is the radioactivity when the muon irradiation is terminated.

3-1-1-1. Example Estimation for Longer Irradiation Time than the Half-life of $^{99}$Mo

Under the above assumption, $^{99}$Mo production was estimated for irradiation of 5.5 days by NMCR which is twice the half-life of $^{99}$Mo (66.0 hours). As a result, $^{99}$Mo is generated by $2.33 \times 10^{12}$ Bq (2.33 TBq). This corresponds to 63.0 Ci in the unit once used for this purpose. Also, the isotope ratio of Mo after irradiation for 5.5 days is

|  |  |
|---|---|
| $^{95}$Mo: | 0.55%, |
| $^{96}$Mo: | 16.50%, |
| $^{97}$Mo: | 22.00%, |
| $^{98}$Mo: | 55.01 %, and |
| $^{99}$Mo: | 5.95%. |

The production volume per muon beam channel for generating NMCR under this condition will be described. $^{99}$Mo produced by 5.5-day irradiation with muon is $7.97 \times 10^{17}$ atoms, and its radioactivity is $2.33 \times 10^{12}$ Bq (2.33 TBq, 63.0 Ci). We assume that 82.4% of the $^{99}$Mo nuclei decays into $^{99m}$Tc nuclei. Since the decay constant of $^{99m}$Tc is $3.198 \times 10^{-5}$ for its half-life of 6.02 hours, its radioactivity is $2.10 \times 10^{13}$ Bq (568 Ci). Assuming that the loss due to subsequent ion separation and recovery, pharmaceutical manufacture, transportation, radiation equilibrium, milking operation, etc. is 50%, the radioactivity of $^{99m}$Tc that can be used as nuclear medicine RI is $1.05 \times 10^{13}$ Bq (284 Ci). In this context, the amount for a dose is about 740 MBq (20 mCi). If this value is adopted, it is concluded that an amount corresponding to 14,200 doses can be manufactured for 5.5-day muon irradiation. If this process is carried out without any breaks, the amount that can be produced and used in one year is estimated by multiplying it 365/5.5 = 66.4 times, leading to $6.97 \times 10^{14}$ Bq (18.8 kCi), which in turn corresponds to the number of administrations of about 940,000 doses. For example, the total amount of $^{99m}$Tc used in nuclear medicine diagnosis in Japan is 900,000 per year (NPL4). Therefore, the demand of that scale can be covered with 1 muon beam channel. In addition, the $^{99}$Tc raw material consumption amounts to 2.4 mg if it is calculated based on the consumption in 5.5-day irradiation. In reality, the amount of $^{99}$Tc solid target having a required size (area and thickness) for efficiently stopping the negative muon on the $^{99}$Tc solid target to produce $^{99}$Mo is about 25 g. This amount of $^{99}$Tc can be easily obtained from raw materials described below.

Next, specific radioactivity of $^{99}$Mo obtained when the irradiation time is longer than the half-life of $^{99}$Mo in this embodiment will be described. The specific radioactivity is a measure of radioactivity of $^{99}$Mo in a certain amount of Mo (for example 1 g). After muon irradiation is performed for the 5.5 days as mentioned above, the content of $^{99}$Mo in the produced Mo is 5.95%. As a result, 0.0595 g of $^{99}$Mo is present in 1 g of Mo, whose number N of $^{99}$Mo is calculated by using the mass number of Mo, where the mass number calculated from the isotope ratio of Mo produced is 97.50, in the following manner:

$$N = 0.0595/97.50 \times 6.02 \times 10^{23} = 3.67 \times 10^{20}/\text{g-Mo}.$$

Based on this value, half-life of $^{99}$Mo, $T_{1/2}$ = 66.0 h, and the decay constant $\lambda$ of the $^{99}$Mo = $0.693/(66.0 \times 3600) = 2.92 \times 10^6$ (sec$^{-1}$), the specific radioactivity R of $^{99}$Mo is calculated as follows:

$$R \quad = \lambda N = 1.07 \times 10^{15} \text{ Bq/g-Mo}$$
$$= 1,070 \text{ TBq/g-Mo}.$$

The specific radioactivity values to be compared are 370 TBq/g-Mo for specific radioactivity of $^{99}$Mo obtained by the nuclear fission method and 0.074 TBq/g-Mo for the specific radioactivity of $^{99}$Mo obtained in a neutron activation method targeting natural Mo as another method (NPL4). In other words, specific radioactivity of about 2.9 times the value of specific radioactivity of Mo obtained from the nuclear fission method is expected for $^{99}$Mo produced by NMCR by selecting a radionuclide for the target nuclide. Thus, it can be concluded that it will show high usefulness in supplying a sufficient amount of $^{99}$Mo, even using a small alumina column, as an example.

3-1-1-2. Example Estimation for Shorter Irradiation Time than the Half-life of $^{99}$Mo

A condition under which the specific radioactivity and production amount of $^{99}$Mo are increased more efficiently than the above estimation is one that NMCR irradiation is performed for 1.0 day, which is about 1/3 of half-life (66.0 hours) of $^{99}$Mo. The resultant $^{99}$Mo amounts to $6.91 \times 10^{11}$ Bq (0.691 TBq, 18.7 Ci). The isotope ratios of Mo after the irradiation for 1.0 day are:

|  |  |
|---|---|
| $^{95}$Mo: | 0.53%, |
| $^{96}$Mo: | 15.90%, |

(continued)

| | |
|---|---|
| $^{97}$Mo: | 21.20%, |
| $^{98}$Mo: | 53.00%, and |
| $^{99}$Mo: | 9.37%. |

Even when the irradiation time is set to 1.0 days, the same calculation as in the case of irradiation for 5.5 days is carried out to estimate specific radioactivity and production amount. The results are indicated in Table 2 in comparison with the irradiation value of 5.5 days.

[Table 2]

| NMCR Irradiation Time | 5.5 days | 1.0 day |
|---|---|---|
| $^{99}$Mo Concentration, after the Irradiation Time, per a Muon Beam Channel | 5.95% | 9.37% |
| $^{99}$Mo Production Amount, " | $2.33 \times 10^{12}$Bq (62.2Ci) $7.97 \times 10^{17}$ atoms | $6.91 \times 10^{11}$Bq (18.7Ci) $2.37 \times 10^{17}$ atoms |
| $^{99m}$Tc Radioactivity, " | $2.10 \times 10^{13}$Bq (568Ci) | $6.24 \times 10^{12}$Bq(169Ci) |
| $^{99m}$Tc Available Amount, " | $105 \times 10^{13}$Bq (284Ci) 14,200 doses | $3.12 \times 10^{12}$Bq (84Ci) 4,200 doses |
| $^{99m}$Tc Yearly Production | $6.97 \times 10^{14}$Bq/y (18.8kCi/y) 940 k doses/y | $1.14 \times 10^{15}$Bq/y (30.8kCi/y) 1.54 M doses/y |
| $^{99}$Tc Raw Material Consumption | 2.4mg | 0.44mg |
| $^{99}$Mo Specific Radioactivity | 1,070TBq/g-Mo (2.9 times Nuclear Fission Method) | 1,690TBq/g-Mo (4.6 times Nuclear Fission Method) |
| y: year, T: $10^{12}$, M: $10^6$, k: $10^3$ | | |

In other words, compared with $^{99}$Mo concentration of 5.95% for 5.5-day NMCR irradiation as described above, it is 9.37% for 1.0-day, or 1.57 times the $^{99}$Mo concentration of 5.5-day irradiation. With respect to the production amount per muon beam channel, $^{99}$Mo that can be manufactured for 1.0 day muon irradiation is $2.37 \times 10^{17}$ atoms, whose radioactivity amounts to $6.91 \times 10^{11}$ Bq (0.691 TBq, 18.7 Ci). To reflect the fact that the number of manufacturing processes in one year will increase for repetitive manufacturing processes than in the case of 5.5-day irradiation, the production volume in the case of 1.0-day irradiation is multiplied by 5.5, which yields generated radioactivity increase of about 1.64 times. After all, 1.0-day irradiation enables $^{99m}$Tc production of 1.14 x $10^{15}$ Bq (30.8 kCi) per year. The number of doses corresponding to this amount is about 1.54 million. The material consumption of $^{99}$Tc required is calculated to be 0.44 mg by calculating the corresponding amount of $^{99}$Tc for 1.0-day irradiation. This amount can be easily obtained from raw materials described below as in the case of irradiation for 5.5 days.

The specific radioactivity R of $^{99}$Mo is calculated from the content of $^{99}$Mo (9.37%) in the produced Mo when irradiated with muon for 1.0 days by the same calculation as

$$R \quad = \lambda N = 1.69 \times 10^{15} \text{ Bq/g-Mo}$$

$$= 1{,}690 \text{ TBq/g-Mo.}$$

For $^{99}$Mo produced by NMCR for 1.0 days by selecting a radionuclide for the target nuclide, we can expect specific radioactivity of about 4.6 times the specific radioactivity value of $^{99}$Mo obtained from the nuclear fission method. Even under this irradiation condition, a sufficient amount of $^{99}$Mo is supplied, so it can be said that it has high usefulness.

As described above, the method for generating $^{99}$Mo from $^{99}$Tc, a radionuclide, by nuclear transmutation through NMCR in the present embodiment shows sufficient practicability in the cases of shorter- and longer- MNCR irradiation time in comparison with $^{99}$Mo half-life, and it is preferable in the method to set the MNCR irradiation time shorter than the half-life of $^{99}$Mo.

In the following, the target material for obtaining $^{99}$Tc for production of $^{99}$Mo will be described, and the method for recovering $^{99}$Mo will also be described. Among the isotopes of Tc, $^{99}$Tc, which is useful as a target nuclide, is an artificial radionuclide and thus it is necessary to artificially manufacture it. There are two promising candidates for the

$^{99}$Tc source. One is a high-level radioactive waste obtained by reprocessing of spent nuclear fuel, and the other is a recycled material.

3-1-2. Production of $^{99}$Mo from $^{99}$Tc in High Level Radioactive Waste

A high-level radioactive waste contains $^{99}$Tc at a certain rate of 1 kg per ton, and it is easy to isolate Tc from other metallic elements after the partitioning mentioned above followed by an additional processing. Also, in the situation after using $UO_2$ fuel at the burnup rate of 45 GWd/tHM in the pressurized water reactor (PWR) and cooling thereafter for 5 years, $^{99}$Tc concentration in Tc isotopes contained in the spent nuclear fuel is 100 percent, i.e., Tc isotope of the other mass number is not included (NPL5). The $^{99}$Tc is an LLFP with a half-life of about 210,000 years. In addition, the $^{99}$Mo-$^{99m}$Tc generator can be produced from $^{99}$Tc, a radionuclide of Tc in the spent nuclear fuel, by way of NMCR in accordance with the above principle.

The process of producing a $^{99}$Mo-$^{99m}$Tc generator from a high level radioactive waste in spent nuclear fuel includes a step of extracting $^{99}$Tc from a high level radioactive waste in the first place, a step of producing $^{99}$Mo by NMCR in the second place, and a step of producing a $^{99}$Mo-$^{99m}$Tc generator in the third place.

In the step of extracting $^{99}$Tc from a high level radioactive waste, any chemical treatment and physical treatment can be adopted for implementing the present embodiment. One example of a method for separating nuclides currently being studied for a high-level radioactive wastes is a method called partitioning. For the partitioning, wet method (method using nitric acid) and some dry methods can be adopted. Here, for an example of the wet method, specific description will be set forth below based on the 4-group partitioning process (NPL1 and NPL2). A high level radioactive liquid waste, which is a high level radioactive waste, already contains nitric acid. Pretreatment is carried out by acting formic acid on it (denitration). Solvent extraction is carried out by applying a DIDPA (diisodecylphosphoric acid) solvent to the solution from which the precipitate has been removed. In the solvent extraction, when a solvent and an aqueous solution are placed in an identical container, elements which migrate from the aqueous solution layer to the solvent layer and which do not migrate can be separated, allowing the extraction. Among them, raffinate, a component remaining in the aqueous solution layer and does not migrate to the solvent layer, contains Tc. The raffinate is further reacted with formic acid and heated to precipitate (denitration precipitation). This precipitate is a group of partitioned 4 groups and contains Tc and platinum group. The other groups may be contained in each component separated so far or will be separated by additional operation. There is no particular obstacle to implementation by those skilled in the art.

From the Tc and the platinum group of the precipitate obtained in the denitration precipitation step, by further acting hydrogen peroxide ($H_2O_2$) on the dissolution, Tc can be dissolved in the aqueous solution with high yield and can be separated from the platinum group elements (Ru, Pd, Rh) (NPL3).

Next, $^{99}$Mo is produced from $^{99}$Tc by NMCR. For this purpose, a mixture of $^{99}$Mo and Mo having stable nuclei can be produced by NMCR according to the reaction mode described above. In the case of using a high-level radioactive waste as a raw material, a process of elution with the nitric acid, the partitioning mentioned above, and the like allows us to employ $^{99}$Tc aqueous solution (aqueous solution containing $^{99}TCO_4^-$ ion) extracted therefrom for the target material. By irradiating the muon for a time determined based on the half-life of $^{99}$Mo, it is possible to generate $^{99}$Mo efficiently. This irradiation time is, for example, 5.5 days which is twice the half-life (66 hours) of $^{99}$Mo, or 1.0 days which is 1/3 of the half-life.

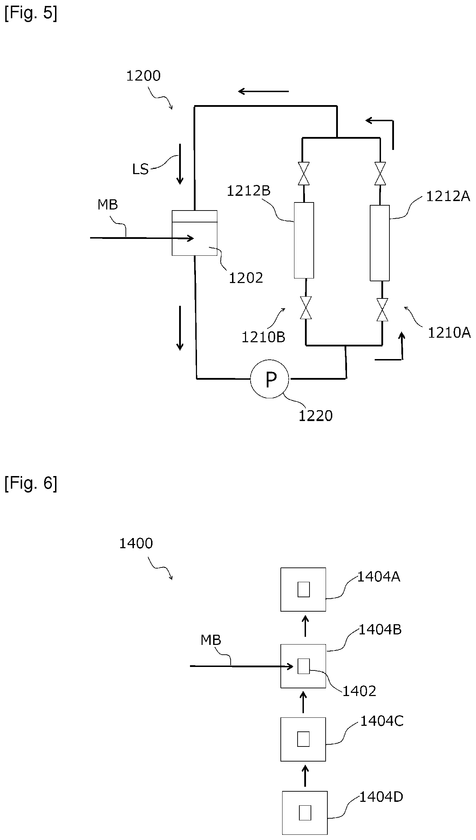

Specifically for NMCR and recovery and collection of generated $^{99}$Mo, any method by one of the present inventors and disclosed in PTL1 can be adopted. For example, ion containing $^{99}$Mo (hereinafter referred to as $^{99}$Mo ion), typically $^{99}MoO_4^{2-}$ produced, is absorbed onto an ion exchange column (alumina column) and separated from a substance containing the ion having $^{99}$Tc, such as $^{99}TcO_4^-$ ($^{99}$Tc ion) for recovery. FIG. 5 is an explanatory diagram illustrating a schematic configuration of a manufacturing apparatus 1200 for manufacturing $^{99}$Mo by NMCR adopting a liquid raw material. In this method that employs a liquid material, Mo containing $^{99}$Mo produced by NMCR is collected in the form of $MoO_4^{2-}$ ion onto a column 1212A in a line 1210A or a column 1212B in a line 1210B. The columns at this time are selected to be an adsorption column or an ion-exchange column. Onto the columns 1212A and 1212B, $MoO_4^{2-}$ is collected but $^{99}TcO_4^-$ is not captured due to the difference in electric charge. The alumina column adsorbs ions by electrostatic action, where Mo ion ($MoO_4^{2-}$) is more significantly adsorbed in comparison with $^{99m}$Tc nuclide or $^{99}$Tc nuclide, which takes form of $^{99m}TcO_4^-$ or $^{99}TcO_4^-$ respectively. Therefore, the generated Mo can be efficiently collected while preventing $^{99}$Tc from being mixed. That is, if the liquid target material 1202, which is an aqueous solution containing Mo ions at the irradiation position of the muon, is irradiated with the muon beam MB while circulating the liquid flow LS in the circulation path by an appropriate pump 1220, generated Mo ion is collected from the substance of the liquid flow LS discharged from the irradiation position due to the flow (the irradiated fluid) when it passes through the columns 1212A and 1212B. Furthermore, it is preferable that the $^{99}$Tc ion will be reloaded, or repositioned into the irradiation position of the muon beam for the target nuclide of the muon due to the significant utilization efficiency of the raw material, even if there remains $^{99}$Tc ion in the liquid flow LS that is not collected by the columns 1212A and 1212B. In this method adopting a liquid material, it is useful to arrange a plurality of columns such as Tc ion collecting columns 1212A and 1212B to make each other a standby system. It is to be noted that the frequency of replacing the columns 1212A and 1212B and recovering the Mo ions adsorbed thereon corresponds to the NMCR irradiation time in the case that $^{99}$Mo is produced in the form of Mo ions by the manufacturing apparatus 1200. Estimates for this frequency to be once for every 5.5 days and for 1.0 days have been described in the section 3-1-1.

Thus, even if $^{99}$Mo is produced in the target raw material containing Tc ion ($^{99}$TcO$_4^-$), $^{99}$Mo can be easily separated and collected from the target raw material by letting the columns 1212 A and 1212B such as an alumina column absorb $^{99}$Mo ion ($^{99}$MoO$_4^{2-}$). In addition, these columns themselves can be made of the same material as the column adopted for the $^{99m}$Tc generator. This collection process is a totally inverted operation of an operation in the $^{99}$Mo-$^{99m}$Tc generator where $^{99}$Mo ions are absorbed to the ion exchange column (alumina column) and $^{99m}$Tc ions generated by decay are eluted off by milking. Although stable nuclei $^{95}$Mo - $^{98}$Mo can also be generated at the time of NMCR and even the Mo is mixed with $^{99}$Mo, the purity of $^{99m}$Tc eluted by the milking operation of $^{99}$Mo-$^{99m}$Tc generator is not affected.

As another production example, a technique of a batch production process 1400 that employs a target material containing $^{99}$Tc can also be employed. When irradiating muon continuously, the half-life of $^{99}$Mo of 66 hours is not an obstacle. FIG. 6 is an explanatory diagram illustrating the outline of the process of producing $^{99}$Mo by the batch manufacturing process 1400 by NMCR. Target raw materials that can be adopted this time are Tc$_2$O$_7$ solids or pertechnetate aqueous solutions, a certain amount of which is contained in one of appropriate containers 1404A to 1404D. The process of irradiating a unit amount of the target material 1402 with a predetermined dose of the muon beam MB for the batch processing is not only suitable for sequential processing by replacing the target material 1402 in each container, such as the containers 1404A to 1404D, but also able to be automated by using a transfer apparatus. For a unit amount of irradiated solid or liquid, necessary steps for separation process, formulation or the like can be performed thereafter. In the actual process, muonic atom X-rays and $\mu$-e decay electrons can be measured from the outside, and muon incident energy can be optimized.

Contamination of the external environment is less likely to occur in batch processing, and there is an advantage that the outer container becomes a protective container for transport without any modification. It is also useful from a practical point of view as a method for manufacturing radioactive materials to process by NMCR while a substance having radioactivity is encapsulated in a container. For example, it is possible to transport $^{99}$Mo after NMCR while sealing it as much as possible up until it is recovered or separated from the target material. In this embodiment in which all of the target nuclide $^{99}$Tc, $^{99}$Mo after generation, and $^{99m}$Tc after generation are radioactive substances, the practicality of the production of radioactive substances by NMCR in batch processing is high from the viewpoint of radiation protection. $^{99m}$Tc ions generated during transport can be easily chemically separated from $^{99}$Mo ions. The target material 1402 inside the containers 1404A to 1404D in FIG. 6 can be either solid or liquid. Furthermore, in the batch manufacturing process 1400, although only a single container (here, the container 1404B) is indicated for a target of NMCR at a time, it is possible to make various modifications such as simultaneous irradiation to a plurality of containers 1404 by distributing muon beams according to implementation requirements.

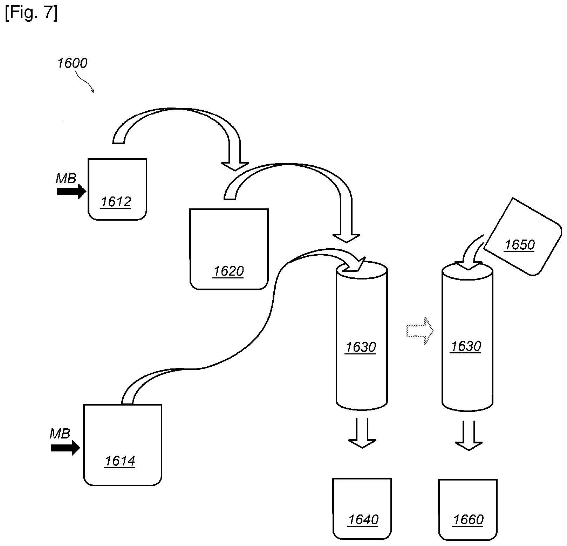

FIG. 7 is a schematic chart illustrating outline of a process 1600 for further processing the product obtained by the batch processing, indicating cases where a solid $^{99}$Tc target is adopted and a liquid $^{99}$Tc target is adopted, based on the example of a product containing Mo ions. In the processing process 1600, when a solid $^{99}$Tc target 1612 is used for the muon beam MB irradiation, an aqueous solution 1620 is prepared by dissolving the solid $^{99}$Tc target after the irradiation in which $^{99}$Mo is generated with an appropriate acid or the like to generate $^{99}$Mo-$^{99}$Tc ion. For ease of dissolution, it is preferable that the solid $^{99}$Tc target 1612 has been made into a fine powder in advance. In the case the liquid $^{99}$Tc target 1614 is used for the muon beam MB irradiation, an aqueous solution corresponding to that aqueous solution has been used from the muon irradiation step and is adopted as it is. In order to separate $^{99}$Tc ions and $^{99}$Mo ions from each other in the aqueous solution 1620 and the liquid $^{99}$Tc target 1614, it is convenient to adopt an ion separation column 1630 such as an alumina column similar to FIG. 5. As a result, $^{99}$Mo ion is collected onto the ion separation column 1630 and $^{99}$Tc ion passes through it while staying in the aqueous solution. The aqueous solution 1640 containing the $^{99}$Tc can be recycled as a liquid $^{99}$Tc target, or a solid $^{99}$Tc target can be produced therefrom by appropriate chemical treatment or physical treatment for reuse. Since $^{99}$Mo is adsorbed onto the ion separation column 1630 at this stage, it is useful to utilize itself for a $^{99}$Mo-$^{99m}$Tc generator. In addition, when it is necessary to release $^{99}$Mo from the ion separation column, it is possible to elute $^{99}$Mo from the ion separation column to obtain an aqueous solution 1660 in a form of $^{99}$MoO$_4^{2-}$ ion, or in another form containing $^{99}$Mo, by letting an eluent 1650 (e.g., aqueous sodium hydroxide solution) pass through an ion separation column. it is possible to make the obtained $^{99}$Mo into another chemical form suitable for further processing, or it is possible to employ any known chemical manipulation or physical manipulation method already known in the art.

The product containing Mo ions obtained by the batch processing can be separated by a precipitation method or coprecipitation method in addition to the ion exchange method. The precipitation method (and coprecipitation method) that can be adopted is similar to the method used for ordinary chemical separation. It is possible to make the obtained $^{99}$Mo into another chemical form suitable for further processing, or it is possible to adopt any known chemical manipulation or physical manipulation method already known in the art.

Once a necessary amount of $^{99}$Mo is obtained for $^{99}$Mo-$^{99m}$Tc generator from a high level radioactive waste, it is no longer necessary to operate the nuclear reactor using HEU to obtain $^{99}$Mo for the sake of $^{99}$Mo-$^{99m}$Tc generator. In this regard, the present method of using a high-level radioactive waste as a raw material greatly contributes to the establishment and maintenance of the supply chain of $^{99}$Mo-$^{99m}$Tc generator.

3-1-3. Manufacture of $^{99}$Mo from Recycled Raw Material of $^{99}$Tc

In the process of actually producing $^{99m}$Tc and $^{99}$Mo, which amount to the most part of the nuclides used in nuclear medicine applications, $^{99}$Tc can be easily obtained from a by-product in the manufacturing process of the generator for milking, unused chemicals after formulating $^{99m}$Tc, and used generators *per se.* There is no particular difficulty in using such $^{99}$Tc for a target nuclide in the present embodiment. A recycled raw material containing $^{99}$Tc in the present embodiment means, among substances containing $^{99}$Tc, $^{99}$Tc that is produced as a by-product in an arbitrary step up until $^{99}$Mo-$^{99m}$Tc generator is produced, $^{99}$Tc obtained by leaving unused drugs after formulation, or $^{99}$Tc produced by radioactive decay in the $^{99}$Mo-$^{99m}$Tc generator. Since $^{99}$Tc of the nuclide as a raw material needs to be artificially obtained by some method, the substance containing $^{99}$Tc should be substantially one manufactured in connection with the $^{99}$Mo-$^{99m}$Tc generator, except for the radioactive waste mentioned above. The $^{99}$Tc in the case of a nuclide of the recycled raw material means $^{99}$Tc as explained above, while excluding $^{99}$Tc that has been produced via $^{99m}$Tc once produced for $^{99}$Mo-$^{99m}$Tc generators and then administered to the human body or the like for their inherent purpose. The manufacturing process for producing $^{99m}$Tc that lead to a $^{99}$Tc nuclide used for the recycled material can be carried out not only by the conventional method but also by the method of any of the embodiments, though it may not be limited specifically. For example, the aqueous solution 1640 containing $^{99}$Tc after passing through the ion separation column illustrated in FIG. 7 is an example of the recycled material.

FIG. 4 is a decay scheme diagram among nuclides with a mass number A = 99 including $^{99m}$Tc. FIG. 4 indicates $^{99}$Tc (ground state with nuclear spin J = 9/2 +) obtained through $^{99m}$Tc. Since $^{99m}$Tc becomes $^{99}$Tc with a half-life of 6.02 hours, $^{99}$Tc is inevitably generated when handling $^{99}$Mo-$^{99m}$Tc generator. Therefore, $^{99}$Tc for the recycled raw material can be obtained at any process for producing $^{99}$Mo-$^{99m}$Tc generator, at the site where $^{99m}$Tc is actually used, or from the used $^{99}$Mo-$^{99m}$Tc generators that have been returned for storage. Both $^{99}$Mo and $^{99m}$Tc manufactured for $^{99}$Mo-$^{99m}$Tc generators for medical purposes are usually radioactive materials that are subject to radioactive control, though $^{99}$Tc derived from these nuclides exhibits low radioactivity. For this reason, control of $^{99}$Tc manufactured for medical purpose is maintained and most of it is returned. In this embodiment, since $^{99}$Tc exhibiting radioactivity is used for a target nuclide for NMCR, any material including such $^{99}$Tc can be adopted as a target material.

In carrying out the present method using recycled raw materials, there is no need to newly obtain nuclides by the nuclear fission method or nuclides from the high-level waste as in the present embodiment. Therefore, looking at the entire supply chain of $^{99}$Mo-$^{99m}$Tc generators for medical purposes, if this method of using recycled raw materials is implemented, the necessity of implementing a method to handle a high level radioactive waste is mitigated, though it cannot be totally removed. In this regard, the present method using recycled materials greatly contributes to the establishment and maintenance of the supply chain of $^{99}$Mo-$^{99m}$Tc generators.

3-2. Production of $^{133}$Xe from $^{134}$Cs, $^{135}$Cs, and $^{137}$Cs

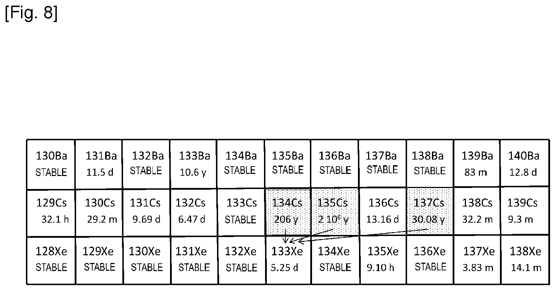

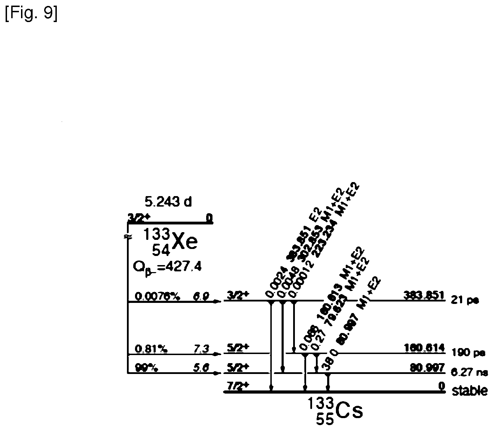

It is possible to manufacture $^{133}$Xe from Cs raw material containing $^{135}$Cs, $^{137}$Cs, which are LLFPs contained in a high level radioactive waste. FIG. 8 is an explanatory diagram illustrating nuclear reactions on the chart of nuclides in which Xe having a mass number of 133 is generated by NMCR. In the production of $^{133}$Xe, Xe gas containing $^{133}$Xe is separated and recovered for use as nuclear medicine RI. It should be noted that $^{133}$Xe is used for pulmonary function test and cerebral blood flow test. FIG. 9 is a decay scheme diagram between Xe and Cs of a mass number of A = 133. In a typical nuclear medicine application of $^{133}$Xe, gamma rays at 81 keV are measured with SPECT. The amount for a dose is about 370 MBq (10 mCi). Also, as an example, Japan's demand of $^{133}$Xe is covered by imports. $^{135}$Cs has a half-life of $2.3 \times 10^6$ years, and $^{137}$Cs has a half-life of 30.08 years. We also considered $^{134}$CS which is not an LLFP but has a half-life of 2.06 years. In particular, $^{135}$Cs, $^{137}$Cs are contained, 0.5 kg and 1.5 kg respectively in 1 ton of a high-level radioactive waste.

In the situation after $UO_2$ fuel is used at a burnup of 45 GWd/tHM in a pressurized water reactor (PWR) and after cooling for 5 years, the ratio of isotopes of Cs contained in spent nuclear fuel is

| | |
|---|---|
| $^{133}$Cs: | 42.1%, |
| $^{134}$Cs: | 1.02%, |
| $^{135}$Cs: | 14.8%, |

(continued)

| | |
|---|---|
| $^{136}$Cs: | 0.0%, and |
| $^{137}$Cs: | 42.1% |

(NPL5). Note that the natural abundance ratio of Cs is 100%$^{133}$Cs.

The reaction modes of NMCR with $^{137}$Cs as the target nuclide are as follows:

$^{137}$Cs $(\mu^-, v)$ $^{137}$Xe,
$^{137}$Cs $(\mu^-, n\ v)$ $^{136}$Xe,
$^{137}$Cs $(\mu^-, 2n\ v)$ $^{135}$Xe,
$^{137}$Cs $(\mu^-, 3n\ v)$ $^{134}$Xe, and
$^{137}$Cs $(\mu^-, 4n\ v)$ $^{133}$Xe.

Also, those with $^{135}$Cs as the target nuclide are as follows.

$^{135}$Cs $(\mu^-, v)$ $^{135}$Xe,
$^{135}$Cs $(\mu^-, n\ v)$ $^{134}$Xe,
$^{135}$Cs $(\mu^-, 2n\ v)$ $^{133}$Xe,
$^{135}$Cs $(\mu^-, 3n\ v)$ $^{132}$Xe, and
$^{135}$Cs $(\mu^-, 4n\ v)$ $^{131}$Xe.

Of generated Xe Isotopes $^{136}$Xe, $^{134}$Xe, $^{132}$Xe, $^{131}$Xe are stable nuclei, but $^{137}$Xe decays by $\beta^-$ decay into $^{137}$Cs with a half-life of 3.83 minutes, $^{135}$Xe decays by $\beta^-$ decay into $^{135}$Cs with a half-life of 9.10 hours, and $^{133}$Xe decays by $\beta^-$ decay into $^{133}$Cs (stable) with a half-life of 5.25 days. Since a neutron emission level is found for $^{137}$Xe and a phenomenon that the neutron absorption cross section becomes huge (phenomenon known as xenon override in power control of the nuclear reactor) may occur for $^{135}$Xe, it is possible that probability of generation of $^{136}$Xe increases.

The reaction coefficient of each Cs isotope generated by NMCR was calculated based on the values for the reaction coefficient mentioned above. The beam condition and reaction branching ratio at that time were assumed to be identical to those for $^{99}$Tc. The produced Xe isotopes have mass numbers ranging from 129 to 137, and Xe of each mass number is generated from Cs having a different mass number. The radioactive Xe nuclide having a relatively long half-life included in the remaining Xe gas is $^{133}$Xe only. Gas containing $^{133}$Xe is separated and recovered for use as nuclear medicine RI.

The reaction coefficients were calculated using all combinations of the Cs isotopes and Xe isotopes mentioned above. For example, the reaction modes leading to the target $^{133}$Xe are:

$^{133}$Cs $(\mu^-, v)$ $^{133}$Xe,
$^{134}$Cs $(\mu^-, n\ v)$ $^{133}$Xe,
$^{135}$Cs $(\mu^-, 2n\ v)$ $^{133}$Xe, and
$^{137}$Cs $(\mu^-, 4n\ v)$ $^{133}$Xe.

The nuclear reaction diagram is illustrated in FIG. 8. Note that we omit those other than of a mass number of 133. Distribution among isotopes of the reaction coefficients for Xe of each mass number estimated based on the reaction branching ratio and abundance ratio was obtained as follows:

$^{129}$Xe: 0.0211,
$^{130}$Xe: 0.0637,
$^{131}$Xe: 0.0931,
$^{132}$Xe: 0.2347,
$^{133}$Xe: 0.0978,
$^{134}$Xe: 0.1382,
$^{135}$Xe: 0.0990,
$^{136}$Xe: 0.2105, and
$^{137}$Xe: 0.0421.

3-2-1. Process (Outline)

The process of producing $^{133}$Xe by NMCR from $^{134}$Cs, $^{135}$Cs, and $^{137}$Cs in a high level radioactive waste is carried out by the following three steps:

> Step 1: muon irradiation,
> Step 2: cooling (first), and
> Step 3: cooling (second).

In Step 1, muon irradiation is performed on the target material of Cs containing $^{134}$Cs, $^{135}$Cs, and $^{137}$Cs for 5.5 days (about 1 half-life of $^{133}$Xe). The radioactivity at that time is estimated as:

> $^{133}$Xe (5.25 days): $1.57 \times 10^{12}$ Bq,
> $^{135}$Xe (9.10 hours): $3.07 \times 10^{12}$ Bq, and
> $^{137}$Xe (3.83 min): $1.31 \times 10^{12}$ Bq.

Note that Xe of other mass numbers are stable, exhibiting no radioactivity, though they are generated according to their reaction coefficients.

In Step 2, as the first cooling, 1 hour cooling is carried out after muon irradiation. At this time, the half-life of $^{137}$Xe is 3.83 minutes, thus the 1 hour cooling period corresponds to 15.7 half-lives. With so much time, the majority of $^{137}$Xe decays by $\beta^-$ decays into $^{137}$Cs (LLFP). The $^{137}$Cs can be separated and recovered in an aqueous solution. The ratio of the number of isotopic atoms of Cs on completion of Step 2 is:

> $^{133}$Cs: 33.7%,
> $^{134}$Cs: 0.0%,
> $^{135}$Cs: 63.5%,
> $^{136}$Cs: 0.0%, and
> $^{137}$Cs: 2.6%.

In terms of the radioactivity ratio, $^{137}$Cs accounts for 100%.

In Step 3, the second cooling is performed for a longer period (for example, 4 days). The period of 4 days corresponds to 10.5 half-lives of $^{135}$Xe. Since the half-life of $^{135}$Xe is 9.10 hours, most part of it decays by $\beta^-$ decay into $^{135}$Cs (LLFP) in the end. The $^{135}$Cs can be separated and recovered in an aqueous solution. The ratio among the number of isotopic atoms on completion of Step 3 is:

> $^{133}$Cs: 74.3%,
> $^{134}$Cs: 0.0%,
> $^{135}$Cs: 25.7%,
> $^{136}$Cs. 0.0%, and
> $^{137}$Cs: 0.0%.

In terms of the radioactivity ratio, $^{135}$Cs accounts for 100%. Likewise, the ratio of the number of isotopic atoms of Xe on completion of Step 3 is:

> $^{129}$Xe: 2.63%,
> $^{130}$Xe: 7.94%,
> $^{131}$Xe: 11.60%,
> $^{132}$Xe: 29.25%,
> $^{133}$Xe: 5.11%,
> $^{134}$Xe: 17.23%,
> $^{135}$Xe: 0.00%, and
> $^{136}$Xe: 26.24%.

$^{133}$Xe content in Xe gas is 5.11%. Furthermore, the radioactivity ratio of $^{133}$Xe accounts for 99.8%, and the radioactivity is $9.23 \times 10^{11}$ Bq (24.9 Ci).

Using the mass number (133.00) calculated from the isotopic distribution of generated Xe, the number of $^{133}$Xe in 1 g of generated Xe is calculated to be $2.31 \times 10^{20}$/g-Xe. Furthermore, using the half-life of $^{133}$Xe ($T_{1/2} = 5.25$ days), the specific radioactivity of $^{133}$Xe becomes 353 TBq/g-Xe. The specific radioactivity to be compared is 370 TBq/g-Mo of the specific radioactivity of $^{99}$Mo obtained by the nuclear fission method (NPL4).

The production volume of $^{133}$Xe per muon channel is $9.23 \times 10^{11}$ Bq (24.9 Ci). Since the amount for a dose to a patient is 370 MBq (10 mCi), the production volume corresponds to about 2,500 doses.

3-2-2. Details of Process

For implementing the process of producing $^{133}$Xe by NMCR from $^{134}$Cs, $^{135}$Cs, $^{137}$Cs, two candidates seem promising: the same method as the batch production process 1400 for $^{99}$Mo illustrated in FIG. 6, and an on-line manufacturing method. For both cases, liquid targets and solid targets containing Cs are adopted. Solids that can be adopted as the solid target are listed with brief annotations on characters and properties:

cesium hydroxide (CsOH, colorless, hygroscopic),
cesium carbonate ($CS_2CO_3$, white powder),
cesium nitrate ($CsNO_3$, white solid, water insoluble), and
cesium chloride (CsCl, solid).

In the form of these simple substances or mixtures, solids containing $^{134}$Cs, $^{135}$Cs, $^{137}$Cs can be extracted from a high level radioactive waste. On the other hand, typical liquid targets are listed with solubility in the following:

cesium hydroxide (CsOH, solubility 395 g/100 cm$^3$, 15 °C),
cesium carbonate ($Cs_2CO_3$, solubility 260.5 g/100 cm$^3$, 15 °C), and
cesium chloride (CsCl, solubility 162 g/100 ml).

Liquid targets can also be extracted from a high level radioactive waste as simple substances or mixtures in the form of an aqueous solution containing $^{134}$Cs-, $^{135}$Cs-, and $^{137}$Cs ions.

In the case of the batch processing, a typical solid target or liquid target is irradiated with muons as a target material. Apparatus configuration for this process is almost the same as that of FIG. 6. The target raw material of cesium nitrate solid or cesium hydroxide aqueous solution is stored in a container (inner sealed container, not shown in FIG. 6). At this time, the remaining internal volume of the inner sealed container is replaced with high-purity helium gas. The inner sealed container is stored in a container 1404 (FIG. 6) which is an outer container, and muon irradiation is performed from the outside. As a result, the target $^{133}$Xe gas can be obtained in the next step by separating the Cs ions and the rare gas of Xe. Muon incident energy can be optimized by measuring muonic atom X-rays and μ-e decay electrons. In this method, the outer container can be transported as it is to the next process while being used for a protective transportation container, which substantially prevents contamination of the external environment. In the method using the target material container, it is possible to irradiate sequentially by using a large number of target material containers, which is advantageous in that automation can be easy realized.

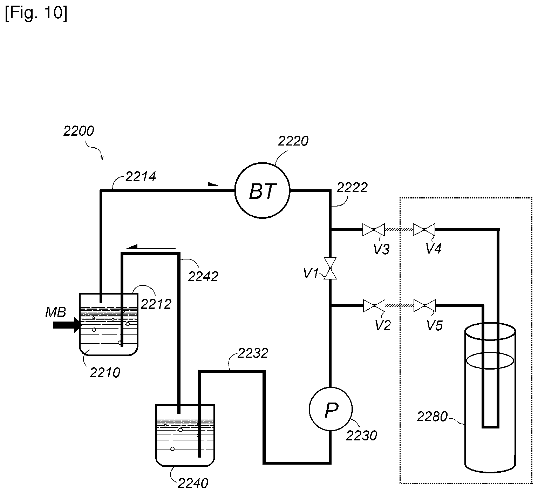

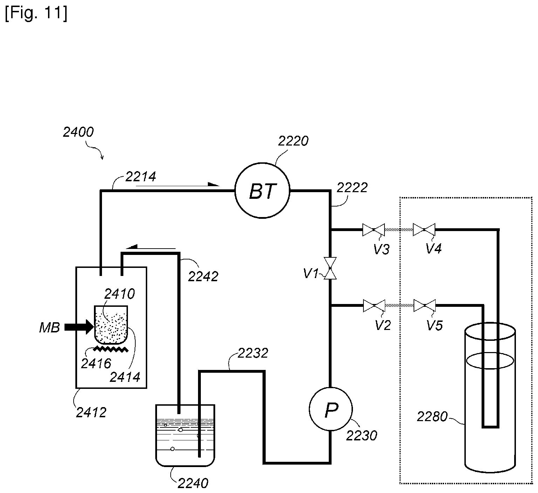

In the case of the on-line production method, muon irradiation for NMCR is carried out using a flow path for gas and liquid. FIGs. 10 and 11 are schematic configuration diagrams illustrating a processing apparatus for manufacturing $^{133}$Xe by NMCR to be implemented in the present embodiment. FIG. 10 illustrates an irradiation processing apparatus 2200 for a liquid target material, and FIG. 11 illustrates an irradiation processing apparatus 2400 for a solid target material. On the liquid target 2210 in FIG. 10, the muon is irradiated by the same process as indicated for $^{99}$Tc in FIG. 5. At that time, it is the sealed target container 2212 that corresponds to the liquid target material 1202. The sealed target container 2212 is filled with a liquid target 2210 together with helium gas to be a target of irradiation. During the muon beam MB irradiation, the valves V2 and V3 are closed and the valve V1 is kept open. A gas line 2214 is connected to the upper space of the sealed target container 2212 with its one end open, and the Xe gas liberated from the liquid target 2210 is collected from the headroom above the liquid level. The other end of the gas line 2214 is connected to the buffer tank 2220. The gas in the buffer tank 2220 is, via the gas line 2222, bubbled into the solution of the sealed aqueous solution trap 2240 by the gas line 2232, with the aid of the gas circulation pump 2230. From the above space of the liquid surface of the aqueous solution trap 2240, a path for bubbling into the liquid of the sealed target container 2210 through the gas line 2242 is established. In the aqueous solution trap 2240, an aqueous solution is stored from which Cs generated from Xe gas is to be recovered. As a result, Cs generated due to radioactive decay during circulation and Cs generated in the buffer tank 2220 is collected in the aqueous solution trap 2240. If the muon irradiation is continued with the gas circulation pump operated, the concentration of the Xe gas generated as a result of NMCR in the liquid target 2210 is increased in the helium gas while the recovery of Cs is continued in the aqueous solution trap 2240.

After the irradiation is completed, a suitable trap such as a liquid nitrogen trap 2280 is connected at the appropriate position along the path of the gas, then the valves V2 to V5 are opened while valve V1 is closed. Thereafter, by operating the gas circulation pump 2230, the Xe gas contained in the helium gas is collected into the liquid nitrogen trap 2280.

In the processing apparatus 2400 for targeting the solid Cs target of FIG. 11, an inner container 2414 that houses the solid Cs target 2410 is also positioned inside the sealed target container 2412 and is also filled with helium gas. A solid Cs target 2410 containing, $^{134}$Cs, $^{135}$Cs, $^{137}$Cs and so on, which is a fine power, is contained in the inner container. This inner container 2414 is opened in the internal space of the sealed target container 2412, and the Xe gas liberated upon irradiation with muons is released to the inside of the sealed target container 2412. It is also preferred to have a temperature controller (e.g., heater 2416) for appropriately controlling the temperature of the solid Cs target to facilitate Xe gas release. The Cs generated by decay in the released Xe gas is collected in the aqueous solution trap 2240 according to the same method as in the case of the liquid Cs target.

In either of the liquid target and the solid target, it is not necessary to interrupt the irradiation of the muon, and the liquid nitrogen trap 2280 can be connected to recover the Xe gas in a timely manner. Thus, even when the muon beam intensity may become the rate-determining factor of the generation rate of $^{133}$Xe, continuous irradiation can be performed to increase the production rate of $^{133}$Xe.

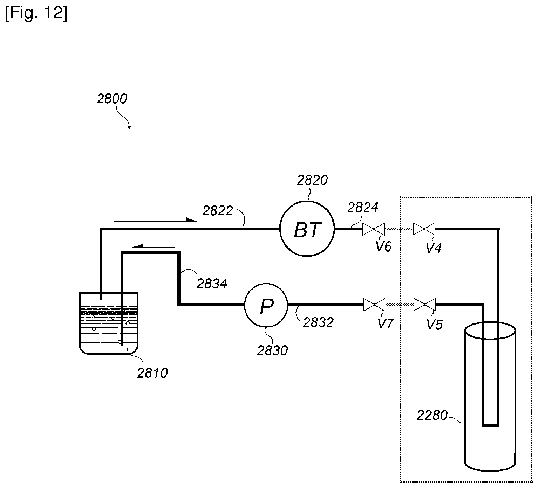

It is useful to recover $^{133}$Cs, $^{135}$Cs, $^{137}$Cs produced by decay in an aqueous solution during at least one of the two cooling periods. FIG. 12 is a schematic configuration diagram illustrating the configuration of the Xe-Cs separation device 2800. In the first place, the liquid nitrogen trap 2280 used in the irradiation treatment apparatuses 2200 and 2400 (FIGs. 10 and 11) is connected to the Xe-Cs separation device 2800. Then, the liquid nitrogen is removed and the temperature of the liquid nitrogen trap 2280 is raised, whereby the Xe gas trapped in the liquid nitrogen trap 2280 is evaporated. The Xe gas is then circulated in a path provided with a suitable buffer tank 2820 and a gas circulation pump 2830 using helium as a circulating gas. A Cs ion trap 2810 has been inserted in the path. Since the gas blown into the Cs ion trap 2810 via the gas line 2832, the gas circulation pump 2830, and the gas line 2834 contains Cs that has been generated by decay of radioactive Xe, dissolving that gas into the aqueous solution of the Cs ion trap 2810 enables the mechanism of the separation and recovery at issue to function. By continuing circulation along the path from the Cs ion trap 2810 and back to the liquid nitrogen trap 2280 via the gas line 2822, the buffer tank 2820, and the gas line 2824, Cs generated by decay will be removed during the cooling period. After recovering the Cs ions, Xe gas containing $^{133}$Xe can be recovered by injecting liquid nitrogen again into the liquid nitrogen trap 2280.

3-3. Production of $^{89}$Rb-$^{89}$Sr from $^{90}$Sr

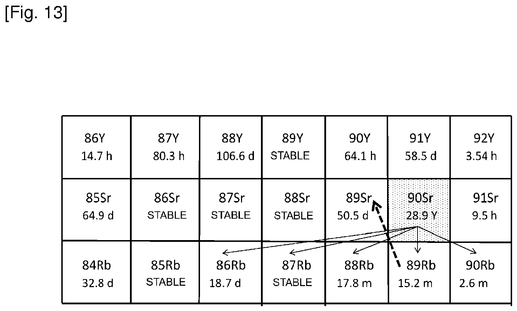

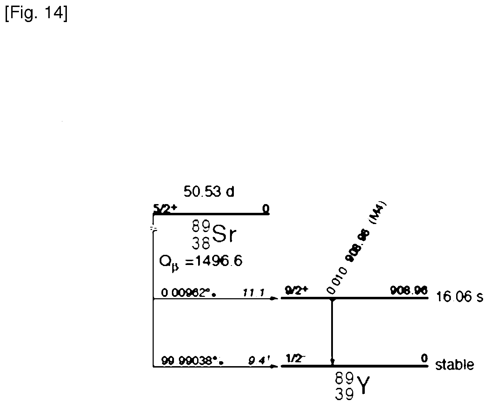

$^{89}$Sr can be produced from Sr raw material containing $^{90}$Sr which is an LLFP contained in a high level radioactive waste. In nuclear medical applications, $^{89}$Sr is used as an internal therapeutic agent for pain relief in the case of painful bone metastasis, where it releases β- ray of maximum energy of about 1.49 MeV. It is a nuclide with a physical half-life of 50.5 days. FIG. 13 is an explanatory diagram illustrating the nuclear reaction on the chart of nuclides where Rb isotope is generated by NMCR adopting $^{90}$Sr target. In addition, FIG. 14 is a decay scheme diagram between Sr and Y having a mass number A = 89. $^{89}$Sr is administered in the form of strontium chloride $^{89}$SrCl$_2$ and the like, and it is intravenously administered to an adult 2.0 MBq/kg for a dose (in the case of 70 kg patient: $1.4 \times 10^8$ Bq (3.8 mCi)). However, it is up to 141 MBq. For example, Japan imports 100% of the demand for $^{89}$Sr. In this embodiment, about 0.6 kg of $^{90}$Sr, which is a target nuclide, is contained in 1 ton of the high-level radioactive waste.

In the situation after using UO$_2$ fuel at a burnup of 45 GWd/tHM in a pressurized water reactor (PWR) and after cooling for 5 years, the ratio of isotopes of Sr contained in spent nuclear fuel is

| | |
|---|---|
| $^{84}$Sr: | 0.00%, |
| $^{85}$Sr: | 0.00%, |
| $^{86}$Sr: | 0.08%, |
| $^{87}$Sr: | 0.00%, |
| $^{88}$Sr: | 41.95%, |
| $^{89}$Sr: | 0.00%, and |
| $^{90}$Sr: | 57.97% |

(NPL5). Incidentally, the natural abundance ratio of Sr is

| | |
|---|---|
| $^{84}$Sr: | 0.56%, |
| $^{85}$Sr: | 0.00%, |
| $^{86}$Sr: | 9.86%, |
| $^{87}$Sr: | 7.00%, |
| $^{88}$Sr: | 82 .58%, |

(continued)

| | |
|---|---|
| $^{89}$Sr: | 0.00%, and |
| $^{90}$Sr: | 0.00%. |

3-3-1. Process (Outline)

The process for producing $^{89}$Sr from the Sr target material containing $^{90}$Sr includes the following three steps:

Step 1: muon irradiation of the target material of Sr containing $^{90}$Sr,
Step 2: cooling of the separated and recovered Rb ions for 25 minutes, and
Step 3: cooling of Rb ions for another 150 minutes.

3-3-2. Details of Process

In Step 1, muon irradiation is performed on the target material of Sr containing $^{90}$Sr for 90 minutes. Thereafter, after irradiating the muon, the Rb ion is separated and recovered from the Sr ion.
The reaction modes of NMCR using $^{90}$Sr as the target nuclide are as follows:

$^{90}$Sr ($\mu^-$, v) $^{90}$Rb ($\beta^-$ decays into $^{90}$Sr with a half-life of 2.6 minutes),
$^{90}$Sr ($\mu^-$, n v) $^{89}$Rb ($\beta^-$ decays into $^{89}$Sr with a half-life of 15.2 minutes, $^{89}$Sr then decays by $\beta^-$ decay into $^{89}$Y with a half-life of 50.5 days),
$^{90}$Sr$^-$ ($\mu^-$, 2n v) $^{88}$Rb ($\beta^-$ decay into $^{88}$Sr with a half-life of 17.8 minutes),
$^{90}$Sr ($\mu^-$, 3 n v) $^{87}$Rb (stable, $4.8 \times 10^{10}$ years), and
$^{90}$Sr ($\mu^-$, 4n v) $^{86}$Rb ($\beta^-$ decays into $^{86}$Sr with a half-life of 18.7 days).

The modes of nuclear reactions are understood from the chart of nuclides on Fig. 13. It should be noted that a Rb isotope is generated in the first place from each isotope of Sr and that, in the case NMCR occurs by targeting $^{90}$Sr as a target nuclide and $^{89}$Rb is generated thereafter, $^{89}$Rb decays by $\beta^-$ decay into $^{89}$Sr in a short time (half-life of 15.2 minutes), and the half-life of generated $^{89}$Sr becomes about 50.5 days, as indiated by a dashed line on FIG. 13.
Assuming identical beam conditions and identical reaction branching ratio to those for $^{99}$Tc and $^{133}$Xe described above, the reaction coefficients from Sr isotopic proportion of spent nuclear fuel to each Rb are calculated to be:

| | |
|---|---|
| $^{84}$Rb: | 0.0210, |
| $^{85}$Rb: | 0.0629, |
| $^{86}$Rb: | 0.1129, |
| $^{87}$Rb: | 0.2967, |
| $^{88}$Rb: | 0.1579, |
| $^{89}$Rb: | 0.2899, and |
| $^{90}$Rb: | 0.05797. |

In Step 1, muon irradiation is performed for 90 minutes toward Sr solid or aqueous solution target containing $^{90}$Sr. This irradiation time of 90 minutes is six times the $^{89}$Rb half-life (15.2 minutes). After muon irradiation, Rb ions are separated and recovered from Sr ions. Then the radioactivity of $^{89}$Rb becomes about $8.84 \times 10^{12}$ Bq.
Next, in Step 2, Rb ions are cooled for 25 minutes. This period is ten times of the half-life of $^{90}$Rb half-life (2.6 min). As a result, $^{90}$Rb decays by $\beta^-$ decay into $^{90}$Sr. $^{90}$Sr is an LLFP. At this point, $^{89}$Sr and $^{88}$Sr, which are daughter nuclei of $^{89}$Rb and $^{88}$Rb respectively, are also mixed together. The ratio of radioisotopes (in atomic fraction) of Sr at this time is:

| | |
|---|---|
| $^{84}$Sr: | 0.0%, |
| $^{85}$Sr: | 0.0%, |
| $^{86}$Sr: | 0.09%, |
| $^{87}$Sr: | 0.0 %, |
| $^{88}$Sr: | 35.3%, |
| $^{89}$Sr: | 61.4%, and |
| $^{90}$Sr: | 3.1% |

The radioactivity ratio is:

$^{89}$Sr: 100.0% and
$^{90}$Sr: 0.02%.

Furthermore, in step 3, Rb ions separated from Sr are cooled for 150 minutes. This period is 10 times the half-life of $^{90}$Rb half-life (15.2 minutes). In addition, $^{88}$Rb, $^{86}$Rb, $^{84}$Rb are included. Among these, $^{88}$Rb decays by β⁻ decay and becomes stable nucleus $^{88}$Sr. $^{86}$Rb and $^{84}$Rb have a half-life of 18.7 days and 32.8 days respectively, and the numbers of decay are very small during cooling for 150 minutes. Sr ions are separated and recovered from the cooled Rb ions. The resulting $^{89}$Sr can be used for nuclear medicine RI.

The isotope ratio (in atomic fraction) of Sr at this point is:

| | |
|---|---|
| $^{86}$Sr: | 1.1%, |
| $^{88}$Sr: | 42.2%, |
| $^{89}$Sr: | 56.7%, and |
| $^{90}$Sr: | 0.008%. |

The radioactivity ratio is

$^{89}$Sr: 100.0%, and
$^{90}$Sr: 0.00007%.

The radioactivity of $^{89}$Sr generated according to the 90-minute irradiation is $5.90 \times 10^8$ Bq (15.9 mCi). At 1 day (24 hours), it becomes $9.43 \times 10^9$ Bq (255 mCi).

At the time when muon irradiation is carried out for 90 minutes and step 3 is completed, number N of $^{89}$Sr in 1g of produced Sr is given by

$N = 0.567/88.46 \times 6.02 \times 10^{23} = 3.86 \times 10^{21}$ /g-Sr,

where the mass number (88.46) calculated from the isotopic distribution of the generated Sr is used. If the half-life of $^{89}$Sr: $T_{1/2} = 50.5$ days and decay constant of $^{89}$Sr: $\lambda = 0.693/(50.5 \times 24 \times 3600) = 1.58 \times 10^{-7}$ (sec⁻¹) are adopted for this calculation, the specific radioactivity R of $^{89}$Sr is calculated as:

$$R \quad = \lambda N = 6.10 \times 10^{14} \text{ Bq/g-Sr}$$

$$= 610 \text{ TBq/g-Sr.}$$

This specific radioactivity of the $^{89}$Sr is about 1.6 times 370 TBq/g-Mo, a specific radioactivity of $^{99}$Mo obtained by the nuclear fission method (NPL4).

The production volume of $^{89}$Sr per day per muon channel is $9.43 \times 10^9$ Bq (255 mCi). Since the amount for a dose to a patient weighing 70 kg is $1.4 \times 10^8$ Bq (3.8 mCi), the above-mentioned production amount per day corresponds to about 67 doses.

In relation to each step, a method for separating Sr ions from the Rb ions mentioned above will be described further. The separation method can be carried out by an ion exchange method and a precipitation method (or coprecipitation method). The ion exchange method is the same as the method for separating $^{99}$Tc and $^{99}$Mo described in FIG. 7. Since the Rb ion is a monovalent ion of an alkali metal and the Sr ion is a divalent ion of an alkaline earth metal, the same processing can be carried out by using an ion separation column utilizing the difference in ion valence and chemical properties. This also applies to the precipitation method.

The embodiments of the present invention have been concretely described above. Each of the above-described embodiments, specific examples, application examples, each theory and method of manufacturing for each nuclide are described for the purpose of explaining the invention, and the scope of the invention of the present application should be determined based on the claims. Also, modifications within the scope of the present invention including other combinations of the respective embodiments are also included in the scope of the claims.

Industrial Applicability

The method for producing the radioactive substance of the present invention and the substance to be produced can be used for any test, apparatus, diagnostic and analytical method using a radioactive substance, and nuclear medicine application.

Reference Signs List

| | |
|---|---|
| 100 | nuclear fuel cycle |
| 10 | uranium mine |
| 12 | uranium |
| 20 | fuel processing plant |
| 22 | fuel |
| 30 | nuclear power plant |
| 32 | spent nuclear fuel |
| 34 | low level radioactive waste |
| 40 | low level radioactive waste disposal facility |
| 50 | reprocessing plant |
| 52 | recovered uranium and plutonium |
| 54 | high level radioactive waste |
| 60 | high-level radioactive waste storage facility |
| 70 | high-level radioactive waste disposal facility |
| 1200 | manufacturing apparatus |
| 1202 | liquid target raw material |
| 1210A, B | system |
| 1212A, B | column |
| 1220 | pump |
| 1400 | batch manufacturing process |
| 1402 | target material |
| 1404 | container |
| 1600 | process of ion exchange processing |
| 1612 | solid $^{99}$Tc Target |
| 1620, 1640, 1650, 1660 | aqueous solution |
| 1614 | liquid $^{99}$Tc target |
| 1630 | ion separation column |
| 2200, 2400 | irradiation treatment device |
| 2210 | liquid target |
| 2212 | sealed target container |
| 2214, 2222, 2232, 2242 | gas line |
| 2220, 2820 | buffer tank |
| 2230, 2830 | gas circulation pump |
| 2280 | liquid nitrogen trap |
| 2410 | solid Cs target |
| 2412 | sealed target container |
| 2414 | inner container |
| 2416 | heater (temperature controller) |
| 2800 | Xe-Cs separation device |
| 2240, 2810 | Cs ion trap |
| 2822, 2824, 2832, 2834 | gas line |
| MB | muon beam |
| LS | liquid flow |

**Claims**

1.  A method for producing a radioactive substance comprising:

    step of preparing a target raw material containing a target nuclide which Is a radionuclide, and
    a muon irradiation step for obtaining a first radionuclide through a muon nuclear capture reaction at the target
    nuclide by irradiating the target raw material with negative muons,

wherein the radioactive substance to be produced comprises at least one of the first radionuclide and a second radionuclide, the second radionuclide being at least one descendant nuclide obtained from the first radionuclide via radioactive decay,

wherein the target nuclide is at least one of descendant nuclides obtained from the first radionuclide or the second radionuclide via radioactive decay, and

wherein the target raw material contains a recycled raw material that contains at least any of: a by-product in any step, a left over substance obtained from the radioactive substance, and a left over substance obtained from unused substance of the radioactive substance, the target nuclide being originated from the recycled raw material.

2. The method for producing a radioactive substance according to claim 1,
   wherein at least part of the target nuclide in the target raw material is any of radionuclides In long-lived fission products (LLFPs) contained in a spent nuclear fuel or a substance separated from a spent nuclear fuel.

3. The method for producing a radioactive substance according to claim 1 or 2, wherein the target nuclide Is $^{99}$Tc, the first radionuclide is $^{99}$Mo, and the second radionuclide is $^{99m}$Tc.

4. A method for producing a radioactive substance comprising:

   step of preparing a target raw material containing a target nuclide which is a radionuclide, and
   a muon irradiation step for obtaining a first radionuclide through a muon nuclear capture reaction at the target nuclide by irradiating the target raw material with negative muons, wherein
   the radioactive substance to be produced comprises at least one of the first radionuclide and a second radionuclide, the second radionuclide being at least one of descendant nuclides obtained from the first radionuclide via radioactive decay,
   the target nuclide is at least one of descendant nuclides obtained from the first radionuclide or the second radionuclide via radioactive decay, and
   the target nuclide is $^{99}$Tc,
   the first radionuclide is $^{99}$Mo, and
   the second radionuclide is $^{99m}$Tc.

5. The method for producing a radioactive substance according to claim 3 or 4,
   wherein the target material contains a recycled raw material containing at least any of $^{99}$Tc produced as a by-product In an any step until a $^{99}$Mo-$^{99m}$Tc generator is manufactured, $^{99}$Tc obtained in a left over substance of an unused pharmaceutical preparation, and $^{99}$Tc produced after radioactive decay in the $^{99}$Mo-$^{99m}$Tc generator.

6. The method for producing a radioactive substance according to any of claims 3-5, wherein the muon irradiation step is performed for an Irradiation time shorter than 66 hours, which is a half-life of $^{99}$Mo.

7. The method for producing a radioactive substance according to any of claims 3-6 further comprising a collection step of $^{99}$Mo Ion from a substance containing $^{99}$Tc ion which Is an ion of the target nuclide by adsorbing $^{99}$Mo ion which is an ion of the first radionuclide onto an ion exchange column.

8. The method for producing a radioactive substance according to claim 1 or 4 further comprising:

   an unloading step of an irradiated fluid containing the first radionuclide or the second radionuclide and a fluid medium from an irradiation position of the negative muon by transferring the fluid medium, the first radionuclide or the second radionuclide having been obtained from the target nuclide in the muon irradiation step;
   a collecting step for selectively collecting the first radionuclide or the second radionuclide from the irradiated fluid; and
   a reloading step for repositioning the irradiated fluid that has undergone the collecting step into the irradiation position by transferring the fluid medium.

9. The method for producing a radioactive substance according to claim 8, wherein the unloading step, the collecting step, and the reloading step are performed in parallel while the muon irradiation step is continuously performed.

**Patentansprüche**

1. Verfahren zur Herstellung einer radioaktiven Substanz umfassend:

   einen Schritt für die Vorbereitung eines Target-Rohmaterials, das ein Target-Nuklid enthält, das ein Radionuklid ist, und
   einen Schritt für eine Myon-Bestrahlung zur Gewinnung eines ersten Radionuklids durch eine Myon-Kerneinfangreaktion am Target-Nuklid durch Bestrahlung des Target-Rohmaterials mit negativen Myonen,
   wobei die zu erzeugende radioaktive Substanz mindestens eines von dem ersten Radionuklid und einem zweiten Radionuklid umfasst, wobei das zweite Radionuklid mindestens ein von dem ersten Radionuklid durch radioaktiven Zerfall gewonnenes Folge-Nuklid ist,
   wobei das Target-Nuklid mindestens eines der Folge-Nuklide ist, die aus dem ersten Radionuklid oder dem zweiten Radionuklid durch radioaktiven Zerfall gewonnen worden sind, und
   wobei das Target-Rohmaterial ein recyceltes Rohmaterial enthält, das mindestens eines der Folgenden enthält: ein Nebenprodukt in jedem der Schritte, eine Restsubstanz, die aus der radioaktiven Substanz gewonnen wurde, und eine Restsubstanz, die aus einer nicht verwendeten Substanz der radioaktiven Substanz gewonnen wurde, wobei das Target-Nuklid aus dem recycelten Rohmaterial stammt.

2. Verfahren zur Herstellung einer radioaktiven Substanz nach Anspruch 1,
   wobei mindestens ein Teil des Target-Nuklids im Target-Rohmaterial eines der Radionuklide in langlebigen Spaltprodukten (LLFP) ist, die in einem abgebrannten Brennelement oder einer von einem abgebrannten Brennelement getrennten Substanz enthalten sind.

3. Verfahren zur Herstellung einer radioaktiven Substanz nach Anspruch 1 oder 2, wobei das Target-Nuklid $^{99}$Tc ist, das erste Radionuklid $^{99}$Mo ist und das zweite Radionuklid $^{99m}$Tc ist.

4. Verfahren zur Herstellung einer radioaktiven Substanz umfassend:

   einen Schritt für die Vorbereitung eines Target-Rohmaterials, das ein Target-Nuklid enthält, das ein Radionuklid ist, und
   einen Schritt für eine Myon-Bestrahlung zur Gewinnung eines ersten Radionuklids durch eine Myon-Kerneinfangreaktion am Target-Nuklid durch Bestrahlung des Target-Rohmaterials mit negativen Myonen, wobei
   die zu erzeugende radioaktive Substanz mindestens eines von dem ersten Radionuklid und einem zweiten Radionuklid umfasst, wobei das zweite Radionuklid mindestens eines der aus dem ersten Radionuklid durch radioaktiven Zerfall gewonnenen Folge-Nuklide ist,
   das Target-Nuklid ist mindestens eines der aus dem ersten Radionuklid oder dem zweiten Radionuklid durch radioaktiven Zerfall gewonnenen Folge-Nuklide, und
   das Target-Nuklid ist $^{99}$Tc,
   das erste Radionuklid ist $^{99}$Mo, and
   das zweite Radionuklid ist $^{99m}$Tc.

5. Verfahren zur Herstellung einer radioaktiven Substanz nach Anspruch 3 oder 4,
   wobei das Target-Material ein recyceltes Rohmaterial enthält, das mindestens eines von $^{99}$Tc enthält, das als Nebenprodukt in einem beliebigen Schritt bis zur Herstellung eines $^{99}$Mo-$^{99m}$Tc-Generators erzeugt wird, $^{99}$Tc, das in einer Restsubstanz einer unbenutzten pharmazeutischen Zubereitung gewonnen wird, und $^{99}$Tc, das nach dem radioaktiven Zerfall im $^{99}$Mo-$^{99m}$Tc-Generator erzeugt wird.

6. Verfahren zur Herstellung einer radioaktiven Substanz nach einem der Ansprüche 3 bis 5, wobei der Schritt für eine Myon-Bestrahlung für eine Bestrahlungszeit von weniger als 66 Stunden durchgeführt wird, was einer Halbwertszeit von $^{99}$Mo entspricht.

7. Verfahren zur Herstellung einer radioaktiven Substanz nach einem der Ansprüche 3 bis 6, ferner umfassend einen Schritt zum Sammeln von $^{99}$Mo-Ion aus einer Substanz, die $^{99}$Tc-Ion enthält, das ein Ion des Target-Nuklids durch Adsorbieren von $^{99}$Mo-Ion ist, das ein Ion des ersten Radionuklids ist, auf eine Ionenaustauschsäule.

8. Verfahren zur Herstellung einer radioaktiven Substanz nach Anspruch 1 oder 4 ferner umfassend:

   einen Entladeschritt eines bestrahlten Fluids, enthaltend das erste Radionuklid oder das zweite Radionuklid und ein fluides Medium aus einer Bestrahlungsposition des negativen Myons durch Überführen des fluiden Mediums, wobei das erste Radionuklid oder das zweite Radionuklid aus dem Target-Nuklid in dem Schritt für eine Myon-Bestrahlung gewonnen worden ist;

einen Sammelschritt zum selektiven Sammeln des ersten Radionuklids oder des zweiten Radionuklids aus dem bestrahlten Fluid; und

einen Umladeschritt, um das bestrahlte Fluid, das den Sammelschritt durchlaufen hat, durch Überführen des fluiden Mediums wieder in die Bestrahlungsposition zu bringen.

9. Verfahren zur Herstellung einer radioaktiven Substanz nach Anspruch 8, wobei der Entladeschritt, der Sammelschritt und der Umladeschritt parallel durchgeführt werden, während der Schritt für die Myon-Bestrahlung kontinuierlich durchgeführt wird.

**Revendications**

1. Procédé de production d'une substance radioactive comprenant:

une étape de préparation d'une matière première cible contenant un nucléide cible qui est un radionucléide, et une étape d'irradiation de muons pour obtenir un premier radionucléide par une réaction de capture nucléaire de muons au niveau du nucléide cible en irradiant la matière première cible avec des muons négatifs,

dans lequel la substance radioactive à produire comprend au moins l'un d'un premier radionucléide et d'un second radionucléide, le second radionucléide étant au moins un nucléide descendant obtenu à partir du premier radionucléide par l'intermédiaire d'une désintégration radioactive,

dans lequel le nucléide cible est au moins l'un parmi des nucléides descendants obtenus à partir du premier radionucléide ou du second radionucléide par l'intermédiaire d'une désintégration radioactive, et

dans lequel la matière première cible contient une matière première recyclée qui contient au moins l'un quelconque parmi: un sous-produit de n'importe quelle étape, une substance résiduelle obtenue à partir de la substance radioactive, et une substance résiduelle obtenue à partir d'une substance inutilisée de la substance radioactive, le nucléide cible provenant de la matière première recyclée.

2. Procédé de production d'une substance radioactive selon la revendication 1,
dans lequel au moins une partie du nucléide cible dans la matière première cible est l'un quelconque parmi des radionucléides dans des produits de fission à vie longue (LLFP) contenus dans un combustible nucléaire épuisé ou une substance séparée d'un combustible nucléaire épuisé.

3. Procédé de production d'une substance radioactive selon la revendication 1 ou 2, dans lequel le nucléide cible est $^{99}$Tc, le premier radionucléide est $^{99}$Mo, et le second radionucléide est $^{99m}$Tc.

4. Procédé de production d'une substance radioactive comprenant:

une étape de préparation d'une matière première cible contenant un nucléide cible qui est un radionucléide, et une étape d'irradiation de muons pour obtenir un premier radionucléide par une réaction de capture nucléaire de muons au niveau du nucléide cible en irradiant la matière première cible avec des muons négatifs, dans lequel la substance radioactive à produire comprend au moins l'un d'un premier radionucléide et d'un second radionucléide, le second radionucléide étant au moins l'un parmi des nucléides descendants obtenus à partir du premier radionucléide par l'intermédiaire d'une désintégration radioactive,

le nucléide cible est au moins l'un parmi des nucléides descendants obtenus à partir du premier radionucléide ou du second radionucléide par l'intermédiaire d'une désintégration radioactive, et

le nucléide cible est $^{99}$Tc,

le premier radionucléide est $^{99}$Mo, et

le second radionucléide est $^{99m}$Tc.

5. Procédé de production d'une substance radioactive selon la revendication 3 ou 4,
dans lequel le matériau cible contient une matière première recyclée contenant au moins l'un quelconque parmi $^{99}$Tc produit en tant que sous-produit dans une quelconque étape jusqu'à ce qu'un générateur de $^{99}$Mo-$^{99m}$Tc soit fabriqué, $^{99}$Tc obtenu dans une substance subsistante d'une préparation pharmaceutique inutilisée, et $^{99}$Tc produit après désintégration radioactive dans le générateur de $^{99}$Mo-$^{99m}$Tc.

6. Procédé de production d'une substance radioactive selon l'une quelconque des revendications 3 à 5, dans lequel l'étape d'irradiation de muons est mise en œuvre pendant un temps d'irradiation plus court que 66 heures, qui est une demi-vie de $^{99}$Mo.

7. Procédé de production d'une substance radioactive selon l'une quelconque des revendications 3 à 6 comprenant en outre une étape de recueil d'ion $^{99}$Mo à partir d'une substance contenant un ion $^{99}$Tc qui est un ion du nucléide cible par adsorption d'ion $^{99}$Mo qui est un ion du premier radionucléide sur une colonne d'échange ionique.

8. Procédé de production d'une substance radioactive selon la revendication 1 ou 4 comprenant en outre:

    une étape de déchargement d'un fluide irradié contenant le premier radionucléide ou le second radionucléide et un milieu fluide à partir d'une position d'irradiation du muon négatif en transférant le milieu fluide, le premier radionucléide ou le second radionucléide ayant été obtenus à partir du nucléide cible dans l'étape d'irradiation de muons;
    une étape de recueil pour recueillir sélectivement le premier radionucléide ou le second radionucléide du fluide irradié; et
    une étape de rechargement pour repositionner le fluide irradié qui a subi l'étape de recueil dans la position d'irradiation en transférant le milieu fluide.

9. Procédé de production d'une substance radioactive selon la revendication 8, dans lequel l'étape de déchargement, l'étape de recueil et l'étape de rechargement sont mises en œuvre en parallèle alors que l'étape d'irradiation de muons est mise en œuvre de façon continue.

[Fig. 1]

[Fig. 2]

[Fig. 3]

| 96Ru | 97Ru | 98Ru | 99Ru | 100Ru | 101Ru | 102Ru |
|---|---|---|---|---|---|---|
| STABLE | 2.8 d | STABLE | STABLE | STABLE | STABLE | STABLE |
| 95Tc | 96Tc | 97Tc | 98Tc | 99Tc | 100Tc | 101Tc |
| 20 h | 4.3 d | $4.2\ 10^6$ y | $4.2\ 10^6$ y | $2.1\ 10^5$ y | 15.8 s | 14.2 m |
| 94Mo | 95Mo | 96Mo | 97Mo | 98Mo | 99Mo | 100Mo |
| STABLE | STABLE | STABLE | STABLE | STABLE | 66.0 h | STABLE |

[Fig. 4]

[Fig. 5]

[Fig. 6]

[Fig. 7]

*1600*

MB

*1612*

*1620*

MB

*1614*

*1630*

*1650*

*1630*

*1640*

*1660*

[Fig. 8]

| 130Ba STABLE | 131Ba 11.5 d | 132Ba STABLE | 133Ba 10.6 y | 134Ba STABLE | 135Ba STABLE | 136Ba STABLE | 137Ba STABLE | 138Ba STABLE | 139Ba 83 m | 140Ba 12.8 d |
|---|---|---|---|---|---|---|---|---|---|---|
| 129Cs 32.1 h | 130Cs 29.2 m | 131Cs 9.69 d | 132Cs 6.47 d | 133Cs STABLE | 134Cs 206 y | 135Cs 2 10⁶ y | 136Cs 13.16 d | 137Cs 30.08 y | 138Cs 32.2 m | 139Cs 9.3 m |
| 128Xe STABLE | 129Xe STABLE | 130Xe STABLE | 131Xe STABLE | 132Xe STABLE | 133Xe 5.25 d | 134Xe STABLE | 135Xe 9.10 h | 136Xe STABLE | 137Xe 3.83 m | 138Xe 14.1 m |

[Fig. 9]

[Fig. 10]

[Fig. 11]

[Fig. 12]

[Fig. 13]

| 86Y 14.7 h | 87Y 80.3 h | 88Y 106.6 d | 89Y STABLE | 90Y 64.1 h | 91Y 58.5 d | 92Y 3.54 h |
|---|---|---|---|---|---|---|
| 85Sr 64.9 d | 86Sr STABLE | 87Sr STABLE | 88Sr STABLE | 89Sr 50.5 d | 90Sr 28.9 Y | 91Sr 9.5 h |
| 84Rb 32.8 d | 85Rb STABLE | 86Rb 18.7 d | 87Rb STABLE | 88Rb 17.8 m | 89Rb 15.2 m | 90Rb 2.6 m |

[Fig. 14]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014196997 A

### Non-patent literature cited in the description

- G unbunri/Shoumetushori Gijyutu Kenkyuukaihatsu Chokikeikaku (Long-Term Res earch and Development Plan on Partitioning and Transmutation Technology). *Atomic Energy Commission [of Japanese Government,* 02 November 2015, http://www.aec.go.jp/jicst/NC/senmon/old/backend/siryo/ba ck21/sanko2.htm
- fractional partitioning" (in Japanese). Research Organization for Information Science and Techno logy, Genshiryoku Hyakkajiten ATOMICA (ATOMICA, An Encyclopedia of Nucle ar Energy. 21 December 2015
- **YASUJI MORITA ; KENIHCI MIZOGUCHI ; ISOO YAMAGUCHI ; TAKESHI FUJIWARA ; MASUMIT-SU KUBOTA.** Gunbunrihou No Kaihatsu: Syo ukibojikken Niyoru 4 Gunn Gunbunri Purosesu Ni Okeru Tekunechiumu Kyodou No Kakunin (Development of Partitioning Method: Confirmation of Behavior of Technetium in 4-Group Partitioning Process by a Small Scale Experiment). *Jap an Atomic Energy Re-search Institute, (in Japanese), http://jolissrch-inte r.tokai-sc.jaea.go.jp/pdfdata/JAERI-Re-search-98-046.pdf*

- Kokusanka Mo/99mTc No Iryo u Unyou Ni Mukete No Kadai - Kokusanka 99Mo/99mTc No Seizoujyou No Kadai (Problems in Clinical Practice of Domestic Supply of Mo/99mTc: Considerations on the Domestic Production of Mo/99mTc). **HISAMICHI YAMABA-YASHI.** RADIOISOTOPES (in Japanese). Japan Radioisotope Association, 2012, vol. 61, 489-496
- Shiyozumi Keisuiro N enryo No Kakushu Sosei Hyoka (Estimation of LWR Spent Fuel Composition). **RYOHEI ANDO ; HIDEKI TAKANO.** JAERI-Research (in Japanese). Japan Atomic Energy Research Institute, 24 December 2015, 99-004